# EUROPEAN PATENT SPECIFICATION

(11) **EP 1 355 130 B1**
(45) Date of publication and mention of the grant of the patent: **04.12.2013**
(21) Application number: 02008208.7
(22) Date of filing: 17.04.2002
(51) Int. Cl.: G01C 21/36, G01C 21/26, G08G 1/0969

(54) **Navigation system using telecommunications**
Navigationssystem unter Verwendung von Telekommunikation
Système de navigation utilisant des télécommunications

(43) Date of publication of application: 22.10.2003
(73) Proprietor: Hitachi, Ltd., Tokyo 100-8280 (JP); Clarion Co., Ltd., Saitama-shi, Saitama 330-0081 (JP)
(72) Inventor: Endo, Yoshinori, Chiyoda-ku, Tokyo 100-8220 (JP); Morioka, Michio, Chiyoda-ku, Tokyo 100-8220 (JP); Nakamura, Kozo, Chiyoda-ku, Tokyo 100-8220 (JP); Yamaashi, Kimiya, Chiyoda-ku, Tokyo 100-8220 (JP); Ishida, Takaharu, Chiyoda-ku, Tokyo 100-8220 (JP); Matsuo, Shigeru, Chiyoda-ku, Tokyo 100-8220 (JP); Machii, Kimiyoshi, Chiyoda-ku, Tokyo 100-8220 (JP); Tanaka, Katsuaki, Chiyoda-ku, Tokyo 100-8220 (JP)
(74) Representative: Beetz & Partner

(56) References cited:
- US-A- 6 107 944
- US-A- 6 148 261
- US-B1- 6 321 158
- PATENT ABSTRACTS OF JAPAN vol. 2000, no. 15, 6 April 2001 (2001-04-06) & JP 2000 348052 A (NEC CORP), 15 December 2000 (2000-12-15)

## Description

### BACKGROUND OF THE INVENTION

### Field of the Invention

The present invention relates to a vehicle-mounted navigation system, and more particularly to a navigation system based on a scheme where communications are performed between a vehicle-mounted terminal and a server.

### Description of the Prior Art

In JP-A-2000-55682, there has been disclosed a navigation system of the following type: A server transfers a map and a guiding route to a vehicle-mounted device, and the vehicle-mounted device performs the navigation using these pieces of information. In this system, at first, the vehicle-mounted device transmits a starting place and a destination place to the server, and the server calculates and determines the guiding route therebetween. After that, the server transfers the route and a map of the route's portion to the vehicle-mounted device, and the vehicle-mounted device performs the route guidance while displaying the map.

In the above-described technology, however, no consideration has been given to a method of controlling the display picture at the time of the route guidance and a reduction in the data transfer amount.

Also, no consideration has been given to the operability, e.g., an operation in the case where the vehicle-mounted terminal deviates from the guiding route, or a delivery of the map where the safety during the driving has been taken into account. Moreover, no disclosure has been made concerning a method of grasping a cost needed for the data communications and a charge at the time of downloading the contents.

US-A-6107944 discloses a method and system for providing route guidance and other information from a base unit to a remote unit in response to a request from the remote unit. According to its method, a query including a request is formatted at the remote unit and transmitted to the base unit. Then the base unit sends requested route guidance information as a response to the query. The query can also request information about points of interest within a specified distance of an origin by specifying a limit for point of interest searches (i.e. a search range about the origin) in the request message.

US-6321158B discloses an Integrated Routing/ Mapping Information System (IRMIS) which links desktop personal computer cartographic applications to one or more handheld organizer, PDA and the like. The system can provide for "automatic zooming", e.g. to show greater detail or closer detail as the user approaches a destination. Based on a selection of a particular map or area or points of interest by the user, the system enables routing and the extraction or cutting of a route as well as area maps for downloading to the PDA.

### SUMMARY OF THE INVENTION

It is a 1st object of the present invention to provide a vehicle-mounted terminal and a server that allow a communications-type car navigation system to be implemented with a small data transfer amount.

Also, it is a 2nd object thereof to provide a vehicle-mounted terminal and a server that allow the implementation of a communications-type car navigation system that aims at an enhancement in the operability.

The above-described objects are accomplished by the independent claims of the present application.

When the server transfers, to the terminal, the route guidance data that the server has calculated, a configuration is employed where the user is permitted to select a guiding method from among a plurality of guiding methods. In addition, the server, based on this selection, transfers the route guidance data to the terminal, and the terminal displays the guiding picture. Also, the 1st object is accomplished as well by employing a configuration of transferring only the map data and the route guidance data of a type that the user wishes. Furthermore, the 1st object is accomplished as well by caching these pieces of data into the terminal, or by transferring these pieces of data in a state of being compressed.

The other objects, features, and advantages of the invention will become apparent from the following description of the embodiments of the invention taken in conjunction with the accompanying drawings.

### BRIEF DESCRIPTION OF THE DRAWINGS

FIG. 1 is an entire system diagram of a communications-type navi-device;
FIG. 2 is a configuration diagram of a navi-information providing device;
FIG. 3 is a configuration diagram of a navi-terminal device;
FIG. 4 is a hard configuration diagram of the navi-terminal device;
FIG. 5 is a software configuration diagram of the navi-terminal device;
FIG. 6 is a diagram for illustrating an example of the picture transition at the time of performing a route guidance;
FIG. 7 is a diagram for illustrating an example of the picture transition at the time of performing a route guidance subsequent to the route guidance in FIG. 6;
FIG. 8 is a processing flow diagram at the terminal for performing the route guidance processing;
FIG. 9 is a conceptual diagram for explaining a distance calculation among a user's self-vehicle position, the route, and guiding points;
FIG. 10 is a flow chart for measuring a distance between the user's self-vehicle position and the route;
FIG. 11 is a diagram for illustrating an example of an intersection point enlarged-view at a guiding point;
FIG. 12 is a diagram for illustrating an example of the menu picture for specifying a method of displaying the guiding point;
FIG. 13 is a diagram for illustrating an example of the picture display at the time of the route deviation.
FIG. 14 is a diagram for illustrating a display example in the case where no reroute processing is performed when deviating from the route;
FIG. 15 is a diagram for illustrating a display example of the guidance by characters;
FIG. 16 is a diagram for illustrating a display example in a state where the guidance is being performed using a schematic map and the route data;
FIG. 17 is a flow diagram for the route searching;
FIG. 18 is a diagram for illustrating picture transition diagrams for setting a destination place;
FIG. 19 is a diagram for illustrating a transmission format of point-of-interest information;
FIG. 20 is a diagram for illustrating a transmission format of point-of-interest information;
FIG. 21 is a diagram for illustrating a transmission format of a route searching result;
FIG. 22 is a diagram for illustrating a transmission format of a route searching result;
FIG. 23 is a diagram for illustrating a transmission format of a route searching result;
FIGs. 24A and 24B are diagrams for illustrating a transmission format of a route searching result;
FIG. 25 is a flow chart for retrieving point-of-interest information on the periphery of the present location;
FIG. 26 is a flow diagram for a route re-searching;
FIG. 27 is a diagram for illustrating the picture transition of the route re-searching;
FIG. 28 is a diagram for illustrating the picture transition of the route re-searching;
FIG. 29 is a diagram for illustrating setting pictures at the navigation terminal;
FIG. 30 is a server-side processing flow diagram for the route searching;
FIG. 31 is a processing flow chart at the time of requesting a map;
FIG. 32 is a diagram for illustrating an example of the picture transition at the time of requesting the map;
FIG. 33 is a processing flow chart at the time of updating the map;
FIG. 34 is a diagram for illustrating an example of the picture transition at the time of updating the map;
FIG. 35 is a diagram for indicating a URL at the time of requesting the map;
FIG. 36 is a processing flow chart at the time of cutting out the map at the navi-server;
FIG. 37 is a diagram for indicating a map-data file format;
FIG. 38 is a diagram for illustrating an updating-notifying picture when the map at the navi-server is updated;
FIG. 39 is a diagram for illustrating a setting picture for a map automatic download;
FIG. 40 is a diagram for illustrating a setting picture for the map download range;
FIG. 41 is a diagram for illustrating a setting picture for the map download type; and
FIG. 42 is a flow chart for transferring the driving orbital-track of the user vehicle to a center at the time of requesting the route.

### DESCRIPTION OF THE EMBODIMENTS

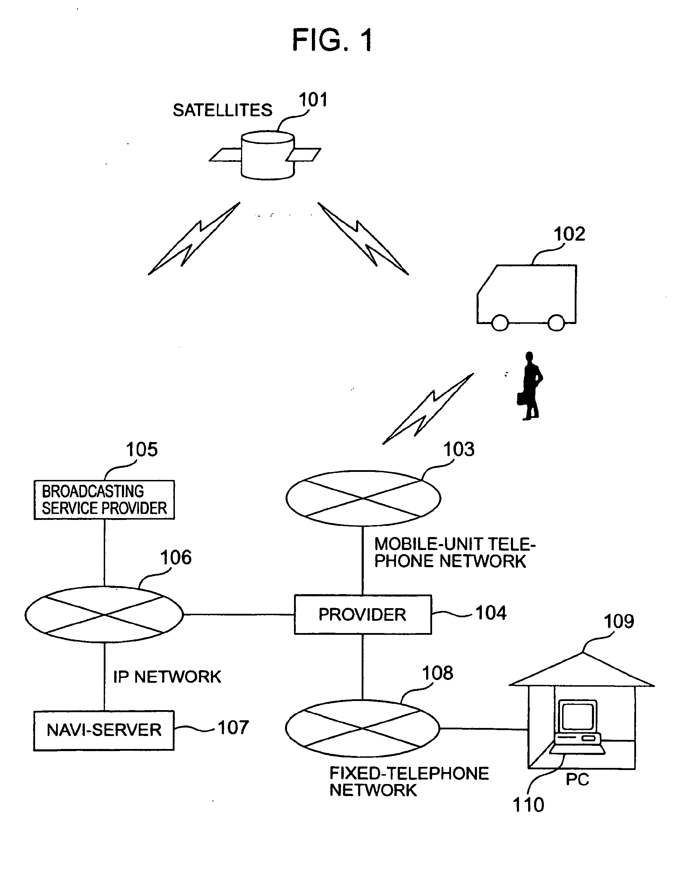

Next, referring to the drawings, the explanation will be given below concerning the details of a communications-type navigation device according to the present invention. FIG. 1 is a diagram for illustrating the entire system of the communications-type navi-device according to the present invention. The entire system according to the present invention includes the following configuration components: Satellites 101, a user vehicle 102 on which a user terminal is mounted, a mobile-unit communications network 103, a provider 104 for establishing the connection with the Internet, a broadcasting service provider 105 for receiving data transmitted from the satellites and delivering the data to the user via an IP network 106, a navi-information providing device 107 (which, in some cases, is described as "a navi-server") for establishing the connection with the IP network 106 so as to transmit/receive the data delivered between the broadcasting service provider 105 and the provider 104, a fixed-telephone network 108 for establishing the connection with the provider so as to perform the transmission/reception of the data via the IP network or the mobile-unit communications network, each user's home 109, and a personal computer 110 existing at each user's home.

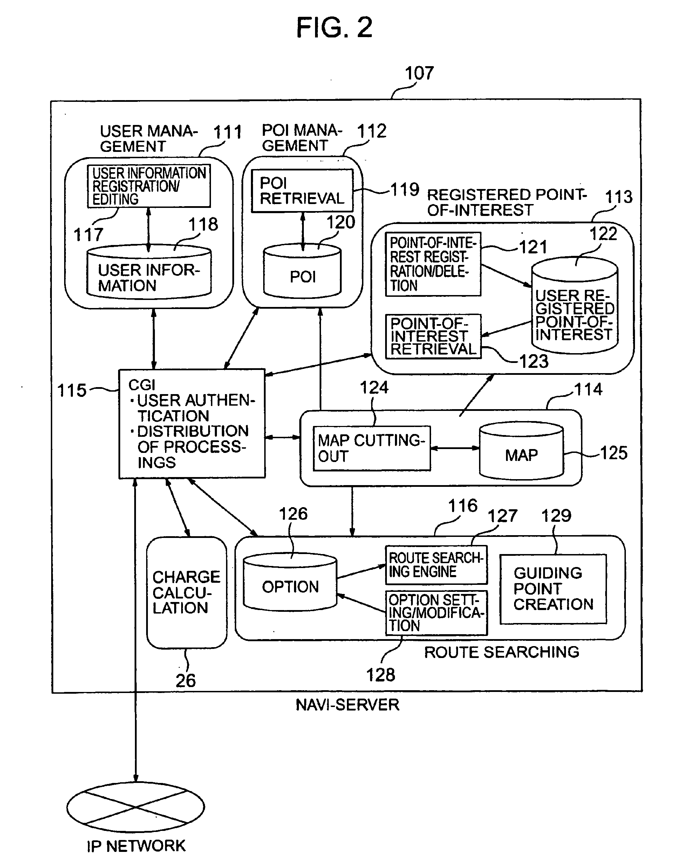

Next, referring to FIG. 2, the explanation will be given below regarding the contents of the above-described navi-information providing device (i.e., the navi-server) 107. At first, the navi-information providing device 107 receives the following information transmitted via the IP network 106: A combination of the parameters for indicating the state of the user vehicle mounting thereon the user terminal, e.g., information on the latitude/longitude, the moving speed, the moving direction, the ID number, the authentication password of the user terminal, and the number of revolutions of the vehicle's engine, and the data concerning a requested service. After that, after a CGI (i.e., Common Gate Interface) 115 has performed the user authentication, the data, depending on the requested service from the user, is transmitted to a function unit for performing any one of a user management 111, a POI (point of interest) management 112, a registered point-of-interest 113, a map management 114, and a route searching 116. The data received at each function unit, as information on the service that meets the user's request, is transmitted to the user vehicle via a route of the CGI 115, the IP network 106, the provider 104, and the mobile-unit communications network 103 (hereinafter, this route will be referred to as "a communications network"). Otherwise, in the case where the use of a broadcasting brings about a cost-reduction in transmitting the information on the above-described service, the information is transmitted to the user vehicle via a route of the CGI 115, the IP network 106, the broadcasting service provider 105, and the satellites 101 (hereinafter, this route will be referred to as "a broadcasting network").

Next, the explanation will be given below regarding the configurations of the above-described function units. The user management function unit 111 includes a user management database 118 and a user information registering/editing application 117. If the user's request in the data transmitted from the user is a user information registration/editing, the function unit 111 makes a comparison between the data and the user management database 118 on the basis of the corresponding user ID, thereby performing the registration/editing of the corresponding item.

If the user issues a POI information acquiring request, the POI management function unit 112 retrieves point-of-interest information on the periphery of the user's location from a POI database 120 with the use of a POI retrieval 119, then delivering its result to the user vehicle via the above-described broadcasting network or communications network. Here, the number of the POIs to be delivered has been registered in advance on each user basis, or the user may specify a maximum value of the number when requesting the POIs.

The registered point-of-interest function unit 113 is a function unit in which the user has registered information such as a destination, a favorite site, and a spot that the user had visited in the past, and in which the user can freely register or delete the information. The function unit 113 includes the following configuration components: A user registered point-of-interest database 122 for storing point-of-interest information (such as the point-of-interest's latitude/longitude, name, characteristics, and the others, e.g., the comments, image information, and voice information on the point-of-interest) registered on each user basis, a point-of-interest retrieval 123 for retrieving a point-of-interest that had been registered in the past in accordance with a user's request, and a point-of-interest registering/deleting function 121, i.e., an application by which the user performs the registration/deletion of the point-of-interest. The trigger for the processing at a registration point-in-time is either a user's request made via the CGI 115 or a request made from a map editing function unit 114 that will be described later.

The map editing function unit 114 includes a map database 125 and a map cutting-out application 124. If the user transmits a map data downloading request along with information on the latitude/longitude where the user exists at the present point-in-time, the function unit 114, using the map cutting-out function 124 and from the map database 125, cuts out the map data existing in a range determined in advance, then transmitting the map data to the user. At this time, instead of simply transmitting only the map data to the user, it is also possible to simultaneously cutting-out the above-described POI or registered point-of-interest information that exists within the range in the map data, and to transmit the data to the user. Also, if a route searching function unit 116 that will be described later is invoked, in the case where the map data on the searched route has been not downloaded onto the terminal-side, the map cutting-out function unit is invoked automatically, then cutting out and downloading the map of the corresponding area.

The route searching function unit 116 includes an optional information database 126, a route searching engine 127, an optional information setting/modifying application 128, and a guiding point creating application 129. After the CGI 115 has authenticated the user, a guiding point is created based on the data transmitted from the user, e.g., the destination place information, the presence or absence of an option, and the like. In creating the guiding point, based on the optional information (e.g., the user uses a general road in many cases, the user selects a route along which it takes the user as little time as possible, or the like) that the user has specified, information needed to create an optimum guiding point is searched from the optional information database 126, then causing its result to be reflected on the guiding point creating application.

A charge calculating unit 26 is a unit for performing a service-charge billing processing to the vehicle-mounted terminal. The charge calculating unit has a function of billing charges for the contents such as the map data and the POI data, and a function of counting packets of the communications data so as to inform the vehicle-mounted terminal of the communications charge.

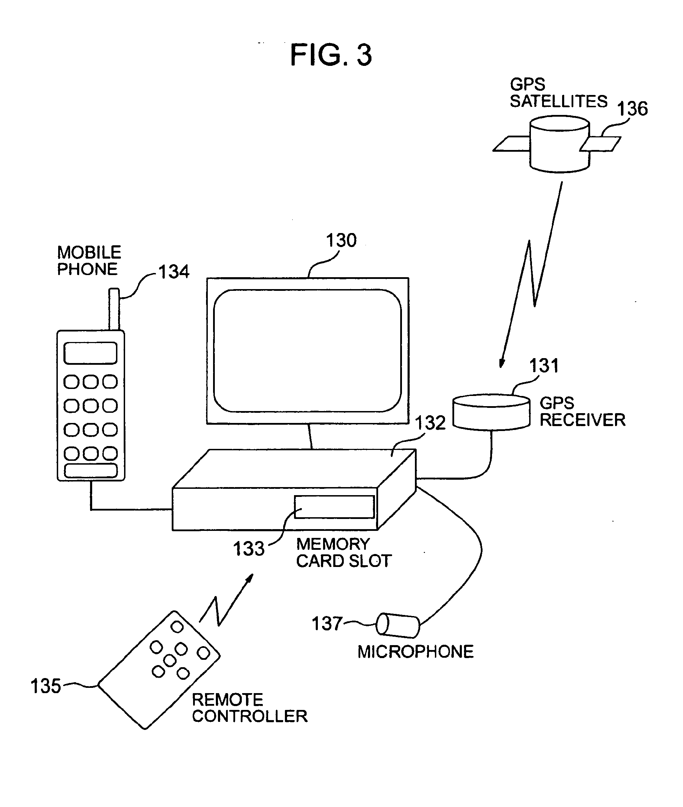

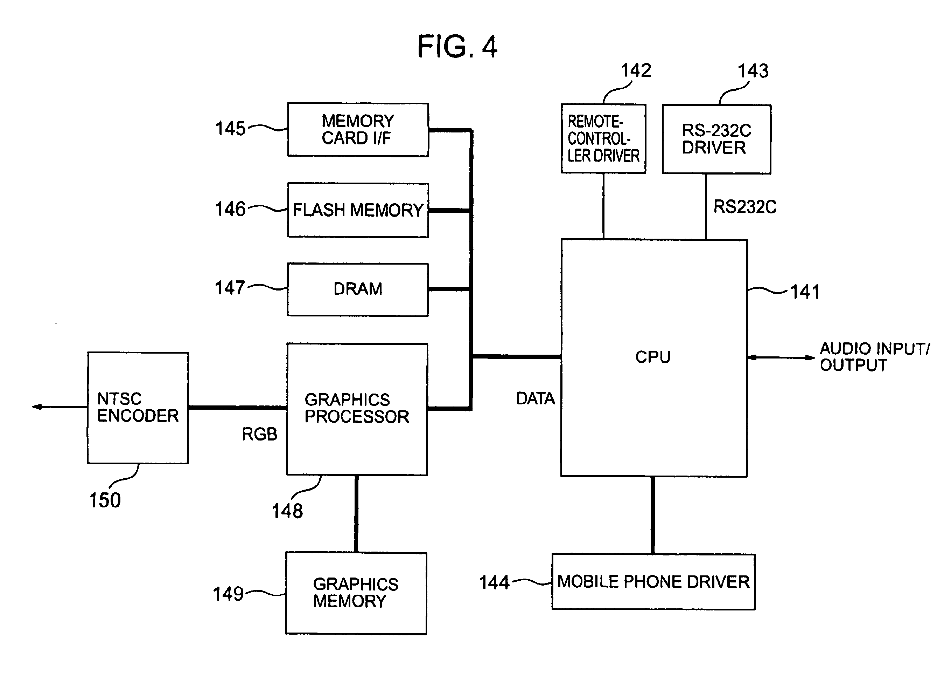

Next, referring to FIG. 3, the explanation will be given below concerning one example of the configuration of the navi-terminal device. The navi-terminal includes a display device 130, a GPS receiver 131, a main body 132, a memory card slot 133, a mobile phone 134, a remote controller 135, and a microphone 137. The display device 130 is a device capable of displaying graphics such as a liquid crystal picture. The GPS receiver 131 is a device for receiving positioning-signals from the plurality of GPS satellites 136 so as to precisely calculate the position of the navi-terminal. The main body 132 is a device inside which there are mounted a CPU, a memory, a power-supply, and a graphics-displaying device. The details of the main body will be explained later, using FIG. 4. The mobile phone 134 is a device for performing the communications with the outside, i.e., the data transmission/reception with the above-described navi-information providing device 107. The remote controller 135 is a device for transmitting, with a button, an operation that the user wishes to perform to the navi-terminal. Also, the use of the microphone 137 makes it possible to send a command with a voice.

The memory card slot 133 is a device to which an external storage device is connected for storing the received data from the above-described navi-information providing device 107, or for loading onto the navi-terminal the information downloaded from the navi-information providing device in the past. The memory card slot 133 is usable as a mere storage device, or is usable for the authentication of the user information for receiving the communications or the broadcasting. For example, when the vehicle on which the present navi-terminal device is mounted is a vehicle such as a rental car that a large number of unspecified users use, a user can utilize the service by inserting, into the memory card slot, a memory card into which the authentication information has been written. Also, by setting an upper-limit amount of money with which the user can enjoy the service offered by the navi-terminal, the user can utilize a service that meets the user's budget. Also, downloading the map at a starting point-of-interest in advance allows the user to save the time and labor of downloading the map from the navi-information providing device 107 at the initial state. Also, the user beforehand writes, into the memory card, services that the user had utilized, then uploading the services onto the navi-information providing device 107 on a fixed-period basis. Next, the navi-information providing device-side analyzes the services. This makes it possible to perform the delivery of the point-of-interest information (POIs) that is to the user's taste.

Although, in the configuration in FIG. 3, the mobile phone 134 has been used as the communications appliance, the use of another communications appliance, e.g., a PDA or a modem integrated with the main body 132, is also allowable. Also, instead of the mobile phone 134, an intra-vehicle LAN (i.e., Local Area Network) is connectable. Also, in place of the GPS receiver 131, a position-identifying service using PHS (i.e., Personal Handyphone System) is usable. Also, the configuration in FIG. 3 is a configuration of having assumed the case where the data reception from the navi-information providing device 107 is performed using the communications network. In addition to this configuration, the configuration is also possible where the following are added to the main body 132: A receiver that can receive the broadcasting radio wave from the satellites, a broadcasting radio wave using a ground-wave digital, or a broadcasting radio wave using an FM radio wave, and a device for decoding the received data.

FIG. 4 is a diagram for illustrating one example of the hard configuration of the navi-terminal device. In the present example, the configuration includes a CPU 141, a remote-controller driver 142 for interpreting a signal from the above-described remote controller 135, an RS-232C driver 143, a mobile phone driver 144, an interface 145 with the memory card slot, a flash memory 146, a DRAM 147, a graphics processor 148, a graphics memory 149, and an NTSC encoder 150. An audio input/output is used for a microphone input for voice recognition and a voice-guide output.

The configuration explained so far is the configuration of the case where the data reception/transmission with the navi-information providing device 107 is performed using the communications network. As described earlier, however, as the configuration of the case where the broadcasting media are employed, there is need of an interface with an antenna for receiving the broadcasting, the decoder, and the like. Also, although the NTSC encoder is generally used for a signal transmitted to the display device, in an area where the PAL scheme is used in the broadcasting, or in the case where the display device is the PAL scheme-compliant device, the portion 150 is, of course, made compliant with the PAL scheme.

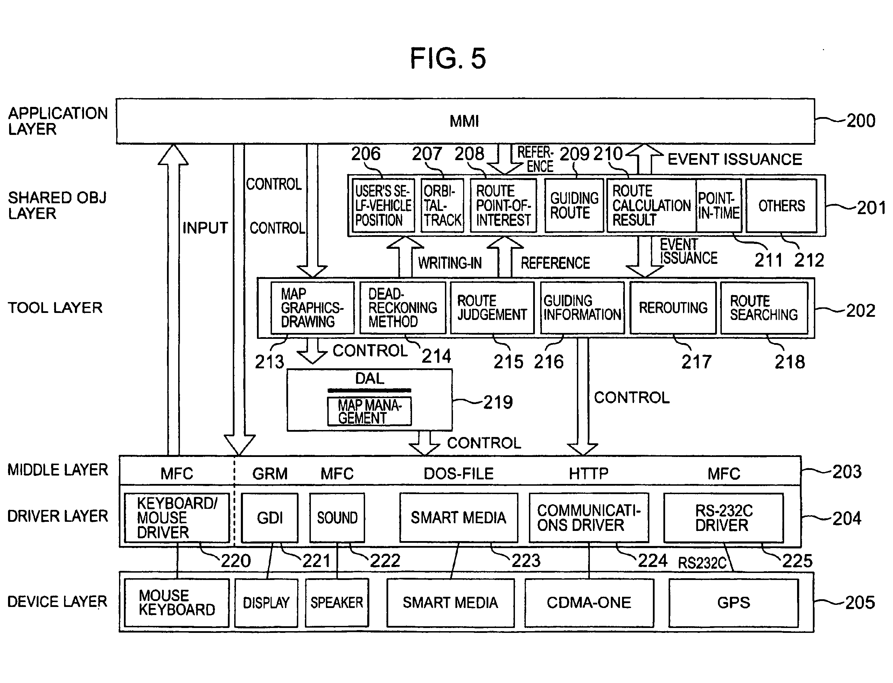

FIG. 5 is a diagram for illustrating one example of the software configuration of the navi-terminal device. This configuration includes a device layer 205, a driver layer 204, a middle layer 203, a tool layer 202, a shared OBJ layer 201, and an application layer 200. Taking one example from among them, the device layer 205 indicates the hardware devices, which include external input devices such as a mouse and a keyboard, output devices such as the display and a speaker, a smart medium having a PCMCIA interface or the memory card, the mobile phone or the communications modem, and the GPS satellites that fetch the data via an RS-232C interface.

The driver layer 204 includes software programs that each drive the devices included in the above-described device layer 205. The middle layer 203 includes general common-software programs for driving the respective devices. The tool layer 202 includes therein tools that are absolutely essential for the navigation, e.g., a map graphics-drawing 213, a dead-reckoning method 214, a route judgement 215, a guiding information 216, a rerouting 217, a route searching 218, a map management 219, and the like. The shared OBJ layer 201 includes data that are necessary for the navigation and that can be accessed in common from the above-described tools included in the tool layer 202, e.g., a user's self-vehicle position 206, an orbital-track 207, a route point-of-interest 208, a guiding route 209, a route calculation result 210, a point-in-time 211, and the other information. These data issue an event, e.g., the display or the modification of each data, toward an MMI (i.e., Man Machine Interface) in the application layer 200. Otherwise, in correspondence with an event inputted from the mouse and the keyboard, data needed for and related with the event within the shared OBJ layer 201 is referred to via the MMI.

Next, the explanation will be given below concerning the services carried out in the present invention. Of them, the description will be first given regarding the case where, using the communications-type navigation system in FIG. 1, the user drives the user vehicle 102 while downloading the map. At first, the case is assumed where the following situation happens: During the driving, the navigation system installed in the user vehicle 102 stores, into the navigation system, map data in proximity to an area where the user vehicle is in an on-run state at present, and then the vehicle deviates from the stored map area. At this time, the navigation system in the user vehicle, using the mobile phone or the modem, issues a map data downloading request to the navi-information providing device 107 via the mobile-unit communications network 103, the provider 104, and the IP network 106. Here, in addition to the request issuing data, the navigation system transmits at least, e.g., data for describing the latitude/longitude of the vehicle's position and an IP address for indicating the position of the navi-information providing device 107 on the IP network 106. The position-identifying service, i.e., the vehicle-mounted GPS system or PHS, acquires the latitude/longitude data on the vehicle. This data is transmitted to the provider 104 via the mobile-unit communications network 103. The provider recognizes, from the received data, the above-described IP address of the navi-information providing device 107 specified by the vehicle-mounted navigation system, thereby accessing the navi-information providing device 107 via the IP network 106. From the latitude/longitude information requested from the vehicle, the navi-information providing device 107, based on the map data stored therein, creates necessary map data in a configuration determined in advance (e.g., a rectangle or a circle). This map data is transmitted to the broadcasting service provider 105, then being encoded and packetized. After that, the map data is transmitted to the satellites 101 and then, after being received at the vehicle 102, the map data is decoded at the vehicle so as to display the map.

In the above-described embodiment, the map data is downloaded onto the vehicle via the satellites with the use of the broadcasting. Meanwhile, in the next embodiment, the description will be given regarding a method of acquiring the necessary map data with the use of the communications alone. When the vehicle moves and thereby enters an area whose map data has been not stored in a storage device of the navigation device in the vehicle 102, as is the case with the previous example, the vehicle transmits the latitude/longitude information on the vehicle and the IP address of the navi-information providing device to the mobile-unit communications network 103, thereby transmitting the above-described data to the navi-information providing device 107 via the provider 104 and the IP network 106. As is the case with the example described at the left, the navi-information providing device 107 creates the necessary map data. Next, the IP address information on the navigation device in the vehicle is added to the created data, After that, the data is divided into packets, then being transmitted to the navigation device in the vehicle via the IP network 106, the provider 104, and the mobile-unit communications network 103.

In the above-described embodiments, the broadcasting signal-transferring path and the communications signal-transferring path that are independent of each other have been assumed as the data transmitting routes from the navi-information providing device 107. It is also possible, however, to perform a switching between the broadcasting and the communications, depending on the situation of the area where the vehicle is positioned at present, e.g., an area where the communications are possible although the broadcasting breaks off, or an area where the opposite is the case. When performing the switching, the display picture of the navigation device displays a necessary expense in the case of downloading the map data via the broadcasting and a necessary expense in the case of downloading the map data via the communications. Seeing the values makes it possible for the vehicle's driver to decide whether or not to execute the downloading when the map data is being lost. Of course, performing the setting in advance allows the execution of a full-automatic downloading of the map data.

Concerning the switching between the broadcasting and the communications, a broadcasting station and the broadcasting service provider have beforehand published a usual broadcasting-capable area and a communications-capable area. Thus, the data on the areas are accumulated on the navi-information providing device-side, and if a map downloading request occurs, the data are referred to. This makes it possible to perform the switching between the broadcasting and the communications. Incidentally, although the satellite broadcasting has been employed as the broadcasting transferring path, the employment of the other media, e.g., the ground-wave digital broadcasting, the FM broadcasting, and the like, results in no problem.

As the next service, the explanation will be given below regarding the service of delivering the point-of-interest (POI, i.e., Point of Interest) information to the user. The position-identifying system by the above-described GPS or PHS mounted on the vehicle 102 acquires and transmits the latitude/longitude information to the navi-information providing device 107 via the mobile-unit communications network 103, the provider 104, and the IP network 106. Based on the simultaneously transmitted user information, the navi-information providing device 107 causes the CGI 115 to perform the user authentication. Moreover, based on the latitude/longitude information, the device 107 returns, back to the user, a plurality of the POIs corresponding to the periphery of the latitude/longitude. As the transferring path here, either of the above-described broadcasting and communications may be employed. Also, when performing the service of downloading the map data in the above-described embodiment, the POIs are delivered simultaneously with the map data to be downloaded. This method makes it possible to deliver the map data to be displayed to the user terminal-side simultaneously with the POI data.

As the next service, the explanation will be given below regarding the registered point-of-interest service. The registered point-of-interest service is as follows: In accordance with a request from the user, an access is made from the vehicle 102 to the registered point-of-interest navi-server in the navi-information providing device 107 via the mobile-unit communications network 103, the provider 104, and the IP network 106, thereby deriving registered point-of-interest information that the user wishes. Otherwise, before the user goes for a drive, from the personal computer 110 (hereinafter, abbreviated as the PC) existing at each user's home 109, the user makes an access to the registered point-of-interest navi-server in the navi-information providing device 107 via the fixed-telephone network 108, the provider 104, and the IP network 106. This access allows the registration/deletion of the point-of-interest information that the user wishes, thereby making it possible to organize the registered data so that the user need not perform a redundant operation at the time of the actual driving.

The user management navi-server performs the user registration and the modification of the registered contents. The route along which a request is transferred from the user is the same as that of the above-described registered point-of-interest service. Here, the following services are made available: Registering a new user, deleting the registration, modifying and confirming the registered contents, retrieving and confirming charge-billing information such as a usage fee, and the like.

The route searching service is the following service: At first, the user specifies a destination at the time of driving the vehicle. Next, from the information, i.e. the destination, the present position obtained from the position-identifying system such as the above-described GPS, and the user's taste described earlier, and the like, the service searches an optimum guiding route, then sending the result to the user.

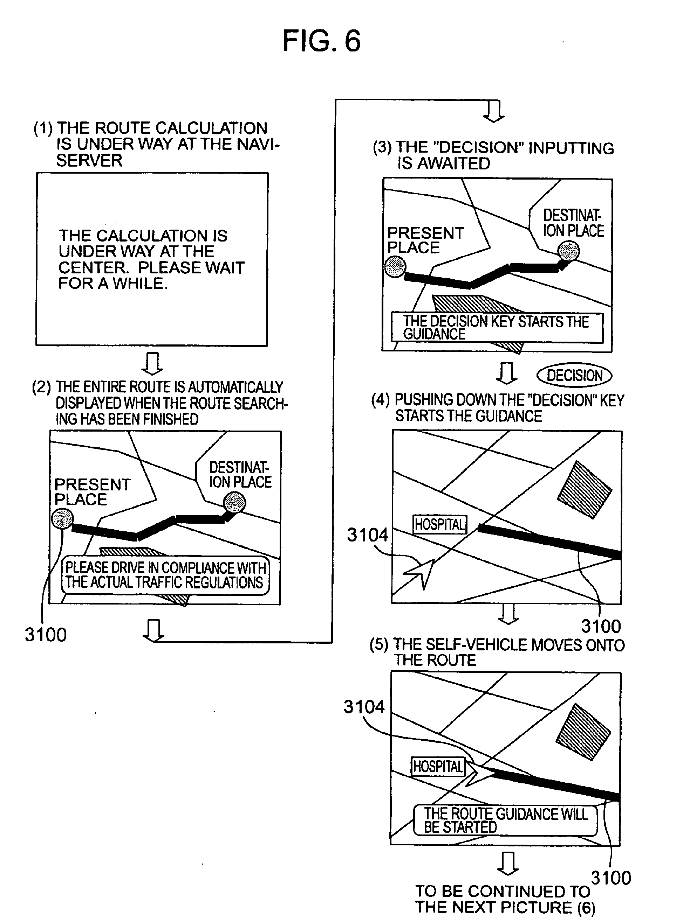

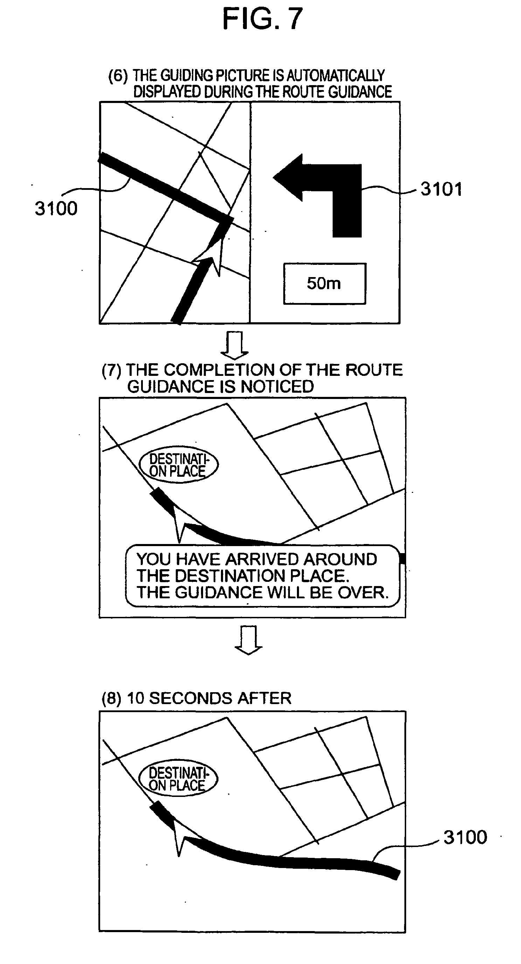

FIG. 6 and FIG. 7 illustrate the picture transition at the time of performing a route guidance. A picture (1) is a display at the terminal-side at the time when the navi-server is now calculating the guiding route. The navi-server can perform the route searching under a condition of adding thereto traffic-congestion information and under-construction information. A picture (2) illustrates a picture example where the terminal displays the whole of the guiding route 3100 after the route searching has been finished. After the navi-server has transferred the searching result to the terminal, the terminal adjusts the displaying scale so that the entire guiding route ranging from the present place to the destination place will be displayed. Furthermore, with the picture and a voice, the terminal issues a caution of encouraging a driving that is compliant with the actual traffic regulations. A picture (3) is a picture for confirming the driver as to whether or not the route guidance may be started. If the driver gets ready, the driver pushes a "decision" button of the remote controller. A picture (4) is a one at the time when the "decision" button has been pushed down. After that, at a point-in-time when a driver's self-vehicle position 3104 has ridden on the guiding route 3100, there comes a picture (5). A picture (6) is a one at the time when the self-vehicle position has approached a guiding point. The guiding point is a point-of-interest where the guiding route turns aside from the leading road and thus the moving direction needs to be modified. The guiding point refers to, e.g., the case where the self-vehicle makes a right or left turn at an intersection point. When the self-vehicle position comes nearer to the guiding point, the half of the picture displays, with an arrow, the direction to which the self-vehicle should make the turn and the distance up to the point. Also, a voice makes a guidance such as "Please turn to the left direction 300 meters ahead from here." A picture (7) is a one at the time when the self-vehicle position comes closer to the destination place. The picture and a voice make an announcement of "You have arrived around the destination place. The guidance will be over." About 10 minutes thereafter, there comes a picture (8), which displays the present place on the map.

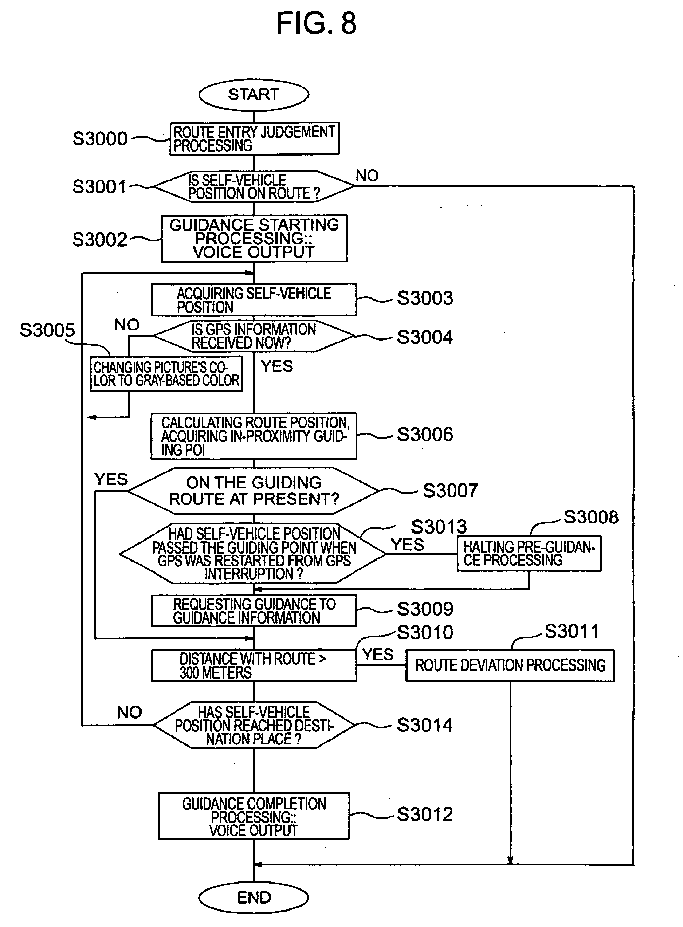

FIG. 8 illustrates a processing flow at the terminal for performing the route guidance processing. At steps S3000 and S3001, a judgement processing is performed as to whether or not the self-vehicle position has entered the guiding route, and the next processing is awaited until the self-vehicle position has ridden on the guiding route. At a step S3002, there is performed the guidance of "The route guidance is started." indicated on the picture (5) in FIG. 6. At a step S3003, the utilization of the GPS acquires the information on the self-vehicle position. At steps S3004 and S3005, if the self-vehicle position comes into under a location such as a skybridge where the GPS information can not be obtained, the picture's color on display is made darker in order to inform the driver that the present state is a positioning-incapable state. At a step S3006, a distance between the self-vehicle position and the guiding route is calculated, thereby judging whether or not the self-vehicle position just rides on the guiding route and also has approached a guiding point. At a step S3007, even if the self-vehicle position comes closer to the guiding point, if the guiding point is a point to which the guidance of the self-vehicle has been already finished (i.e., a point at which an arrow is displayed like the point illustrated on the picture (6) in FIG. 7), the guidance to the point need not be given and accordingly nothing is done. Also, a step S3013 is of a processing of the case where, although the self-vehicle position has approached the guiding point and the arrow has been displayed, thereinafter, the reception state of the GPS becomes worse and thus the positioning becomes impossible. In that case, at a step S3008, displaying the arrow is halted. A step S3009 is of a processing where the self-vehicle position has normally approached the guiding point. At this step, if the self-vehicle position comes closer to the guiding point as far as 300 meters, an arrow is displayed like the picture (6) in FIG. 7, and the guidance with a voice is also given. Also, the distance between the self-vehicle position and the guiding route exceeds 300 meters, the self-vehicle position is assumed to deviate from the guiding route, and at steps S3010 and S3011, a route-guidance stopping processing is performed. This distance of 300 meters is no absolute numerical-value and thus, depending on the positioning accuracy, it is better to modify this distance. Namely, this distance is made shorter if the positioning error is small, and this distance is made longer if the positioning error is large. At a step S3014, a judgement is made as to whether or not the guidance to the destination place has been completed. If the self-vehicle position has reached the destination place, a step S3012 performs the display illustrated on the picture (7) in FIG. 7.

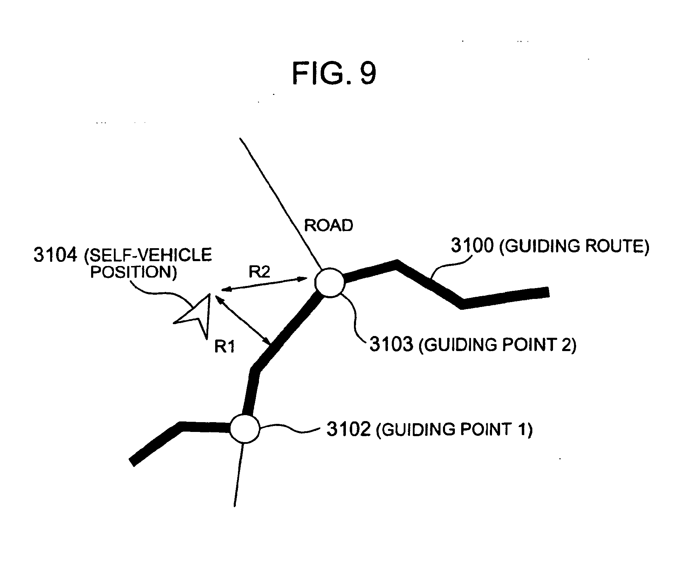

FIG. 9 illustrates the relationship among the self-vehicle position 3104, the guiding route 3100, and guiding points 3102 and 3103. There is a possibility that, depending on the positioning accuracy, the self-vehicle position 3104 may be measured at a location shifted from on the road. Thus, while always measuring the distance between the self-vehicle position and the guiding route, if the distance exceeds a certain fixed range, the self-vehicle position is judged to deviate from the guiding route. In this embodiment, the distance has been set to be 300 meters, which corresponds to R1. Also, a distance (R2) between the self-vehicle position and the guiding point is always measured. If the self-vehicle position comes nearer to this R2 by a certain fixed distance, the picture of the guidance information (i.e., an arrow like the picture (6) in FIG. 7) is displayed. This distance is modified, depending on the speed of the self-vehicle. Namely, in the case of a low-speed driving, the information may be displayed directly in front of the guiding point (e.g., 100 to 300 meters). In the case of a high-speed driving, however, the driving route can not be modified if the information is displayed directly in front of the guiding point. Consequently, in the case of the high-speed driving, the information is displayed in the state of a remote distance (e.g., 500 meters to 1 kilometer).

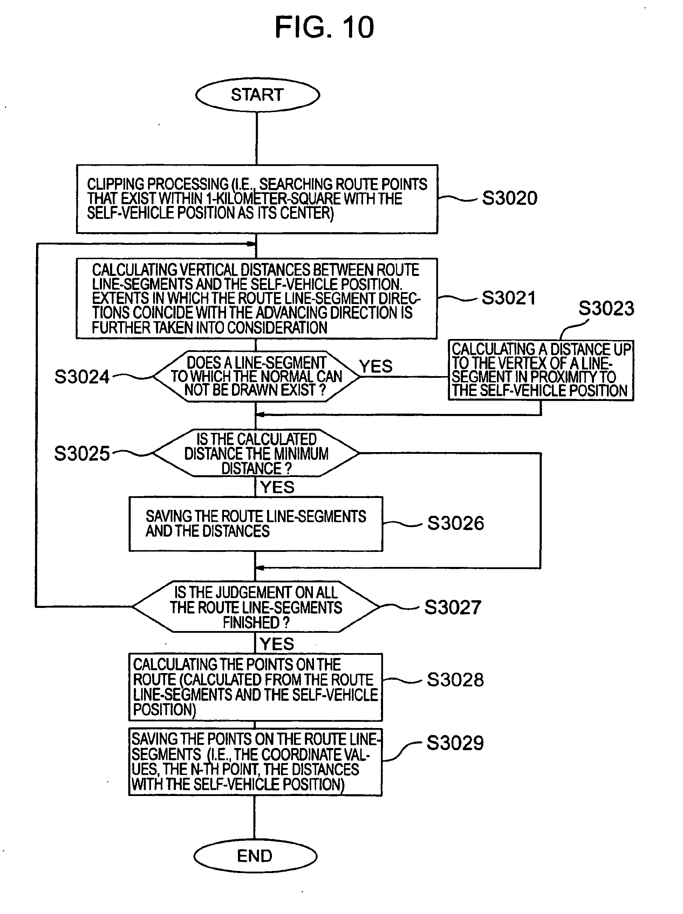

FIG. 10 is a flow chart for measuring the distance between the self-vehicle position and the guiding route. At a step S3020, there is performed a processing of selecting only the route line-segments of the portions in proximity to the self-vehicle position. Instead of checking the route in the driving sequence, a route in proximity to the self-vehicle position is selected each time in this way. This method makes it possible to restart the route guidance even after the positioning-incapable state has long lasted, or even at the time of restoring back onto the route after having deviated from the route. At a step S3021, when calculating the distance between the self-vehicle position and the guiding route, there is performed a distance calculation where the advancing direction of the self-vehicle is taken into consideration. Namely, a route portion where the route direction is the same as the advancing direction is selected with a higher-priority. In this way, the distances with the line-segments selected at the step S3020 are all calculated, then judging that the self-vehicle position lies on a line-segment existing at the nearest distance (S3025 to S3027).

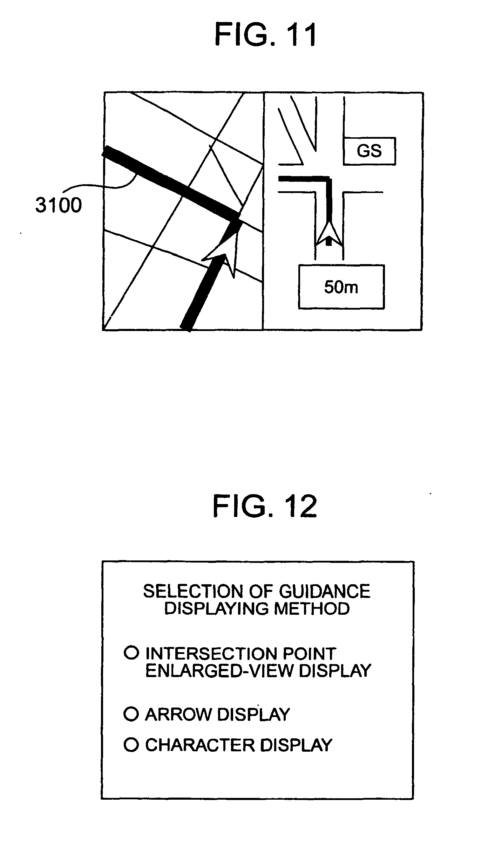

At the time of giving the guidance instruction when the self-vehicle position comes nearer to a guiding point, an enlarged-view of the intersection point may be displayed instead of the arrow display. FIG. 11 illustrates a display example of an intersection point enlarged-view at a guiding point. Whether the display of a guiding point should be given by using the arrow or the intersection point enlarged-view can be set in advance by a menu illustrated in FIG. 12. Either the terminal or the navi-server may store this setting. If the navi-server store this setting, in some cases, it becomes unnecessary to transmit unnecessary guidance data to the terminal. This results in an effect of reducing the communications amount. If, for example, the intersection point enlarged-display is unnecessary, it becomes unnecessary to transmit the detailed map and the intersection point information from the navi-server. Also, there also exists a scheme of dynamically modifying the displaying methods on the halfway to the route. For example, if the intersection point is simple enough like a T-character street or an orthogonal crossroad, the arrow may be displayed. Meanwhile, if the intersection point is of a complicated configuration like the one in FIG. 11, the enlarged intersection point may be displayed. As still another method, there exists a method where, depending on the road type, the following differentiated-type display is performed: The arrow is displayed in the case of a simple road like an expressway's branch, and the intersection point enlarged-view is displayed in the case of an ordinary road.

Also, if no detailed map exists in the terminal, the terminal can not display the intersection point enlarged-view. Thus, it is possible for the navi-server to create the intersection point enlarged-view and to transfer the enlarged-view to the terminal. For example, if the detailed map of the halfway to the route exists in the terminal, the terminal creates the intersection point enlarged-view. If the terminal is entering a location whose detailed map the terminal does not have, the terminal requests the navi-server to create the detailed map, and has the navi-server send the result to the terminal. As another method, there also exists a method where, after the navi-server has transferred the detailed map to the terminal, the terminal creates the intersection point enlarged-view. Meanwhile, when wishing to reduce the communications amount with the navi-server, there also exists a method where the arrow display is performed with respect to only a guiding point at which the terminal can not create the intersection point enlarged-view.

Also, even when the detailed map exists in the terminal, if the detailed map is old and does not reflect on the present situation, a false intersection point is displayed. Accordingly, it is better not to perform the creation of the intersection point enlarged-view at the terminal. In this case as well, the navi-server creates the intersection point enlarged-view, or the terminal creates the intersection point enlarged-view after the navi-server has transferred the detailed map to the terminal. A judgement as to whether or not the detailed map in the terminal has become old is performed by making a comparison between the version number of the map in the terminal and that of the map in the navi-server.

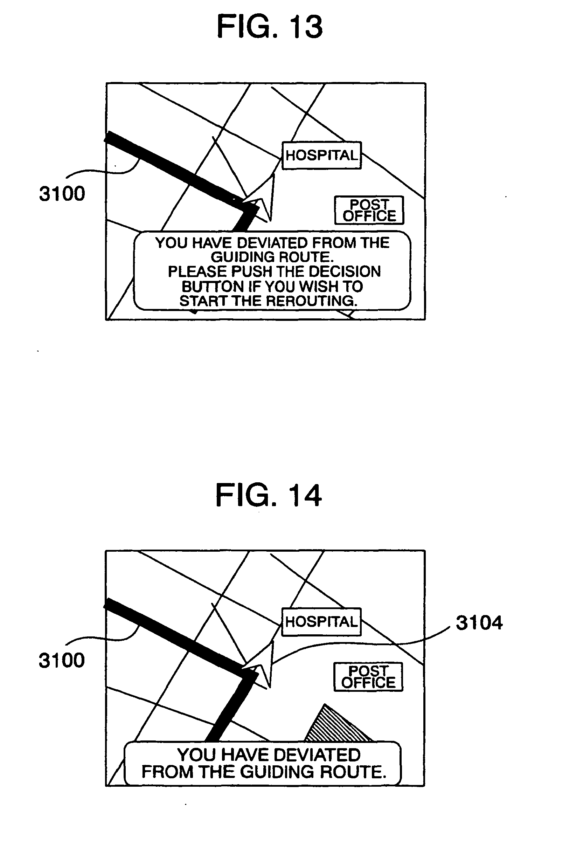

FIG. 13 is a diagram for illustrating a picture display example at the time of the guiding-route deviation. This example is a one where, when the terminal-side map does not satisfy the requirements for the route searching, the rerouting is performed at the navi-server. Since there is need of performing the data communications, a picture for the confirmation is presented to the driver, and a voice asks the driver to give the confirmation. If the driver pushes a decision button, the navi-server starts the rerouting. Moreover, if the driver does nothing in 10 seconds or more, or pushes a cancel button, the guidance is finished. Otherwise, instead of finishing the guidance, there also exists a method where, as illustrated in FIG. 14, the guidance is interrupted while the self-vehicle position is deviating from the guiding route.

FIG. 14 is a diagram for illustrating a display example in the case where no reroute processing is performed when the self-vehicle position deviates from the guiding route. A voice also makes a guidance of "You have deviated from the guiding route." After that, at a point-in-time when the self-vehicle position 3104 rides on the guiding route, the route guidance is restarted.

Also, if the terminal-side map is the route-searching-capable data, the reroute processing can also be performed at the terminal. In this case, the terminal performs the rerouting within a range of the detailed map that exists therein. If the terminal is entering the location whose detailed map does not exist therein, the terminal performs the rerouting after the terminal has had the detailed map transferred from the navi-server.

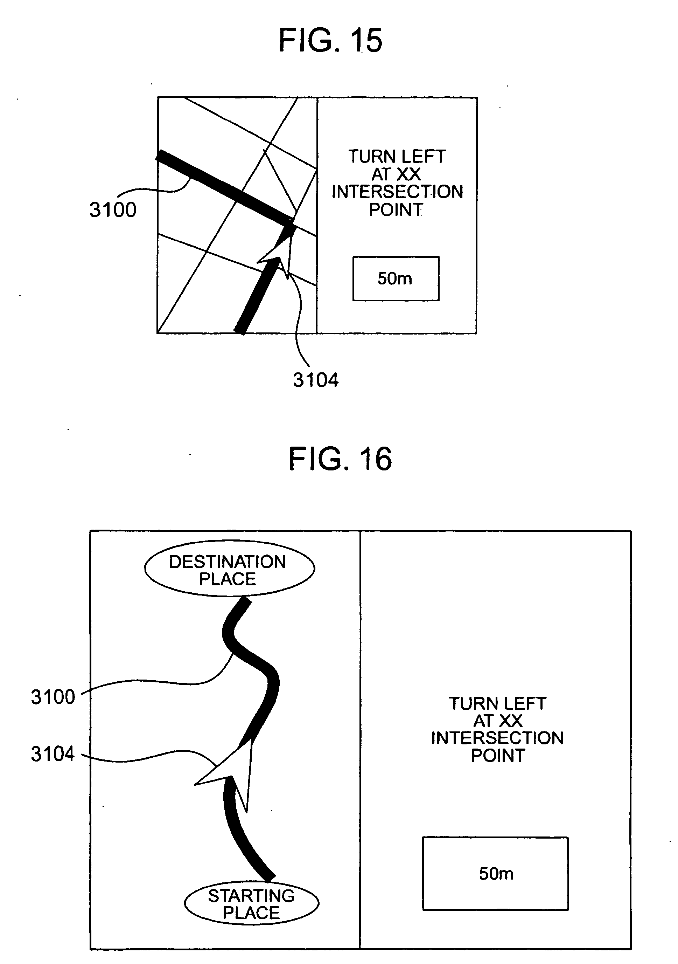

FIG. 15 illustrates a display example of the route guidance by characters. When the self-vehicle position 3104 approaches a guiding point, the characters are displayed to show the direction and the distance in and at which the self-vehicle position should advance. Also, since the driver can not stare at the characters, the guidance by a voice is performed simultaneously. The guidance by the character information like this can be performed even if no detailed map exists in the terminal. FIG. 16 illustrates a display example in a state where the guidance is being performed using a schematic map and the guiding route data. The left-half of the picture displays the guiding route, and the right-half thereof displays the guidance by the character information. A voice also makes a guidance of the guiding information. Since the route-displaying part is of no detailed map, it can not display the intersection point configuration or the like. The route-displaying part, however, makes it possible to confirm whether or not the self-vehicle position 3104 just rides on the guiding route 3100. This scheme allows the guidance to be implemented only if the schematic map exists in the terminal, thereby making it unnecessary to deliver the detailed map.

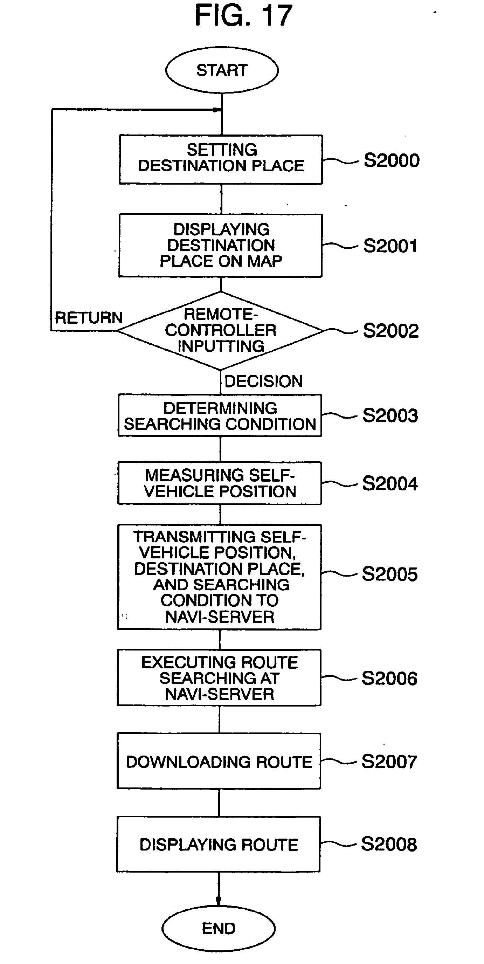

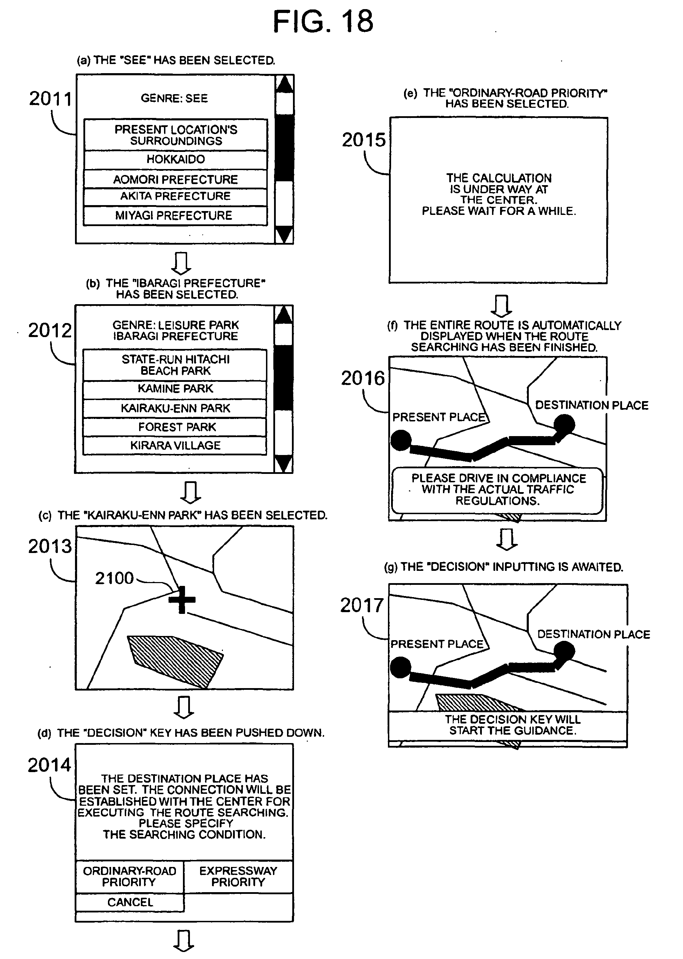

FIG. 17 illustrates a flow diagram for the guiding-route searching. FIG. 17 describes the operations of the navi-terminal and those of the navi-server in a summarized manner. At first, at a step S2000, the navi-terminal sets a destination place. Concerning the setting of the destination place, there exists a method where, for example, an area list or a category list is downloaded from the navi-server so as to focus the destination place with the use of the list. The above-described list is written in such a language as HTML (i.e., Hyper Text Markup Language). The hyperlink to the CGI (i.e., Common Gate Interface) in the navi-server has been set up to the respective items in the list. Consequently, the mere selection of an item permits the user to download the list from the navi-server. The repetition of the processing like this with the use of the HTML makes it possible for the user to ultimately focus the location set as the destination place. FIGS. 18 (a) and (b) illustrate its picture examples. The pictures in FIG. 18 are displayed by an Internet browser (not illustrated) set up at the navi-terminal side.

In FIG. 18, (a) illustrates a picture for specifying state or Prefecture after the genre of the destination place has been specified. Specifying "Ibaragi Prefecture " out of (a) causes the picture in (b) to appear. Also, selecting "the present location's surroundings" causes the self-vehicle position to be measured and transmitted to the navi-server, thereby making it possible to obtain the name list as is illustrated in (b). This selection will be described later, but here, the case of having selected state or Prefecture will be focused and described.

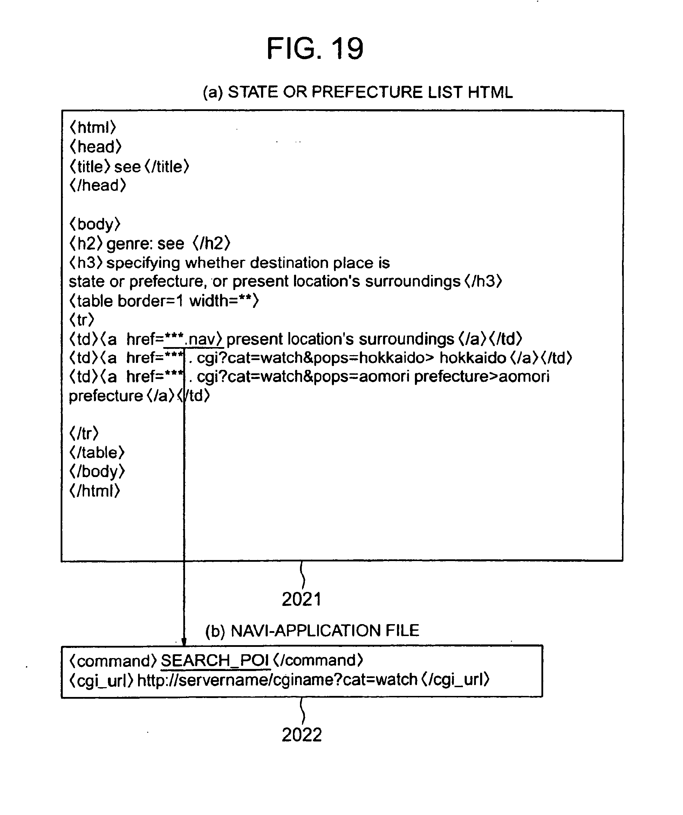

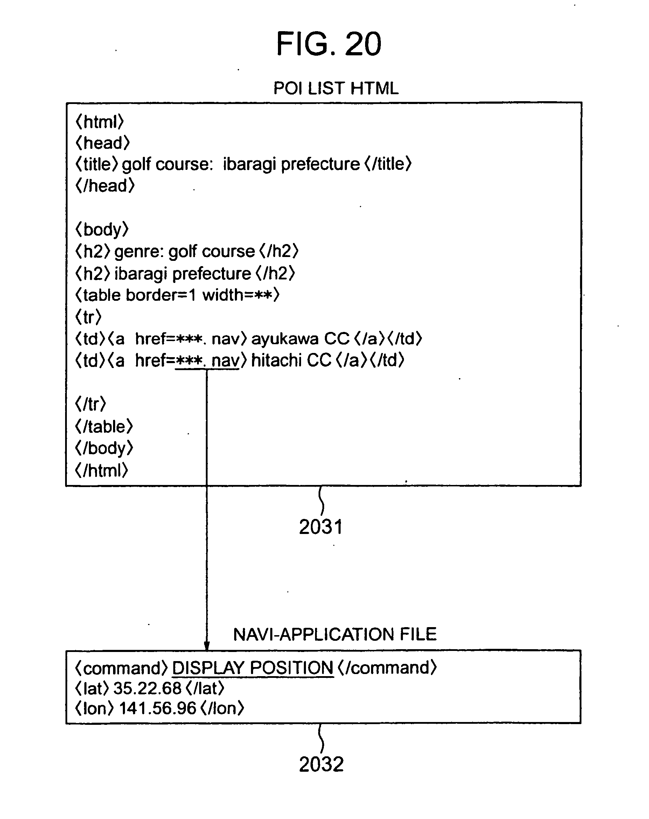

In FIG. 18, (b) illustrates an example where leisure parks in Ibaragi Prefecture have been focused. If the user selects a name out of the picture in (b), point-of-interest information on the name is transmitted from the navi-server. There exist at least 2 types of available point-of-interest information transmitting methods. One is a method of making the point-of-interest information flow in data streams, and the other is a method of saving the point-of-interest information into a file so as to transmit the file name in a manner of being included in the HTML. The transmitting formats will be illustrated in FIG. 19 and FIG. 20.

Also, a method may be used where the navi-terminal side displays the map and specifies, on the map, the point-of-interest which is to become the destination place.

After having focused the location of the destination place, then, at a step S2001, the location is displayed on the map. In FIG. 18, (c) illustrates the display of the point-of-interest onto the map. FIG. 18 (c) displays on the map a cross 2010, which is the point-of-interest focused by the above-described processing.

The user confirms the above-described point-of-interest on the map, and if the user wishes to select the point-of-interest as the destination place, the user pushes the "decision" button of the remote controller. The navi-terminal confirms it at a step S2002 and after that, the navi-terminal transitions to a processing at a step S2003. If the user pushes a "return" button of the remote controller, the navi-terminal sets the destination place once again.

Once the destination place has been set, at the step S2003, a searching condition is set. Regarding the searching condition, there exists a method where, for example, several searching conditions are displayed on the picture so as to request the user to select a searching condition from among them. In FIG. 18, (d) illustrates this display example. FIG. 18 (d) displays 2 types of searching conditions, i.e., a general-road priority and an expressway priority, and the user can select either of them. Incidentally, in addition to these conditions, a charge priority, a time priority, a distance priority, or the like may be set as the route searching conditions. Otherwise, a combination of a plurality of conditions from among them may be specified.

After the user has specified the route searching condition, at a step S2004, the navi-terminal measures the self-vehicle position. The appliance referred to as the GPS (i.e., Global Positioning System) is utilized for the measurement of the self-vehicle position. The GPS is generally used in the existing car navigation system.

When the measurement of the self-vehicle position has been finished, at a step S2005, the navi-terminal transmits, to the navi-server, the self-vehicle position together with the destination place and the route searching condition set so far. As the transmitting protocol to the navi-server, for example, HTTP (i.e., Hyper Text Transfer Protocol) can be used. Also, as the transmitting format of the destination place, the searching condition, and the self-vehicle position, a method can be used where the destination place, the searching condition, and the self-vehicle position are described in CGI parameters as a part of the URL (i.e., Uniform Resource Locator).

At a step S2006, based on the destination place, the searching condition, and the self-vehicle position transmitted from the navi-terminal, the navi-server carries out the route searching, then transmitting the calculation result to the navi-terminal. In the meantime, on the picture at the navi-terminal, there is displayed a notice to the effect that the route calculation is under way at the navi-server. FIG. 18 (e) illustrates this notice. This notice, however, is not essential.

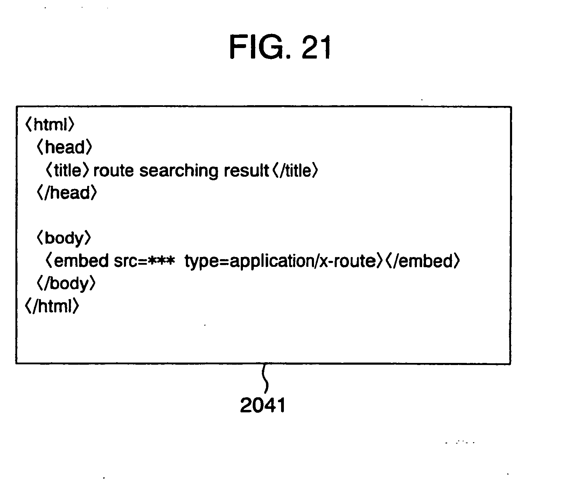

At a step S2007, the navi-terminal receives the above-described calculation result. The route searching result includes the latitude/longitude of a pass point and the guiding point information. Here, transmitting the latitude/longitude of the pass point just as they are can be considered to result in an increase in the communications amount. Consequently, a reference point data and differential data from the reference point may also be transmitted. This will be described later. Also, when transmitting the route data to the navi-terminal, the HTTP may also be used. As the transmitting methods in that case, at least 2 types of transmitting methods are available. One is a method of making the route data flow directly into the HTTP. In this method, after transmitting the contents type, the route data is transmitted in streams. The other is a method of saving the route data into a file so as to transmit the file name in a manner of being described in the HTML. In the present embodiment, the format of the latter case will be illustrated in FIG. 21, FIG. 22, FIG. 23, and FIGs. 24A and 24B. The details thereof will be described later.

At a step S2008, the navi-terminal receives. the route data from the navi-server, and displays the route data on the map. FIG. 18 (f) illustrates this picture example. The picture in FIG. 18 (f) displays a map with the smallest scale that allows the entire route to be displayed. If there exists no such map, the display is performed using the smallest scale map available. The route data is displayed along the road and in a color differing from that of the map. Also, simultaneously with the display of the route, there may also be performed a display for encouraging the user to drive in compliance with the actual traffic regulations. Also, the user may be informed of the display with a voice.

Furthermore, in a time of a few seconds, the picture in FIG. 18 (g) appears. Here, there is displayed a notice to the effect that pushing the decision key of the remote controller starts the guidance. Also, the user may be informed of the notice with a voice. This has a meaning that the guidance is started after the user has read the notice items. The user's pushing the decision key starts the route guidance.

Here, the explanation will be given regarding the transmitting formats in FIG. 19 and FIG. 20. FIG. 19 illustrates an example of the HTML after the focusing of the category has been finished. This is the HTML for specifying state or Prefecture, and describes the picture in FIG. 18 (a). Concerning state or Prefecture, only the hyperlink to the navi-server CGI has been set up thereto. Regarding "present location's surroundings", however, there is provided a menu for retrieving the present location's surroundings around the navi-terminal. Consequently, retrieving the present location's surroundings can not be executed until the navi-terminal transmits the self-vehicle position to the navi-server.

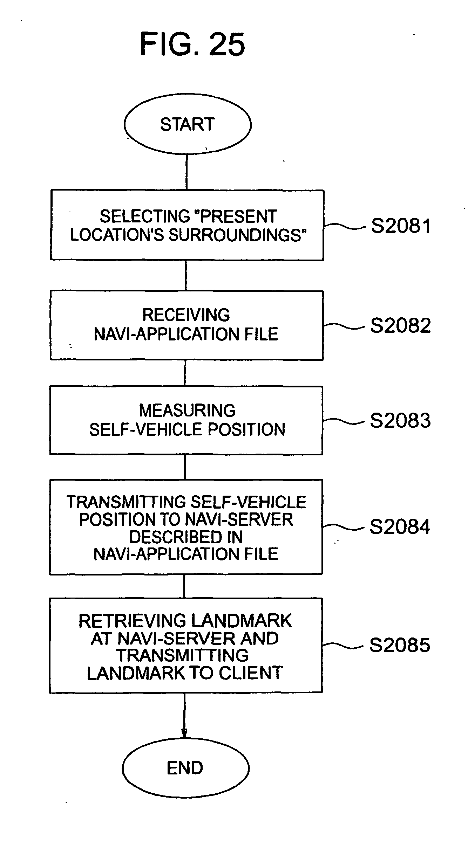

Next, referring to FIG. 25, the explanation will be given below concerning the case where the user has selected "the present location's surroundings" in FIG. 18 (a). In this case, the navi-server transmits a navi-application file in FIG. 19 (b). The navi-server creates this navi-application file simultaneously with the creation of a state or Prefecture list in FIG. 19 (a). The hyperlink has been set up to the navi-application file from "the present location's surroundings". As a result, if the user selects "the present location's surroundings" at a step S2081, the navi-terminal, at a step S2082, can download the navi-application file from the navi-server. If the navi-terminal downloads the navi-application file, the navi-terminal starts up an application for processing the file. The navi-application file has described commands for the navi-terminal-side application and a navi-server URL for requesting the next route searching processing. The above-described application that has read in this, at a step S2083, measures the self-vehicle position by the GPS or the like, then, at a step S2084, transmitting the self-vehicle position to the navi-server. Having received the self-vehicle position, the navi-server, at a step S2085, retrieves landmark information on the surroundings around the self-vehicle position so as to create the list in the HTML, then transmitting the list to the navi-terminal. Its format and its picture have been just illustrated in FIG. 20 and FIG. 18 (b), respectively. The proceedings to be performed from the reception of the list in FIG. 18 (b) are completely identical to the proceedings in the case of having selected state or Prefecture.

Through the above-described processings, the user can obtain the route guidance service. The user, however, does not necessarily drive the self-vehicle along the guiding route that the navi-server has calculated. If the self-vehicle deviates from the route, the rerouting (i.e., route re-calculation) is executable. This rerouting will be explained next.

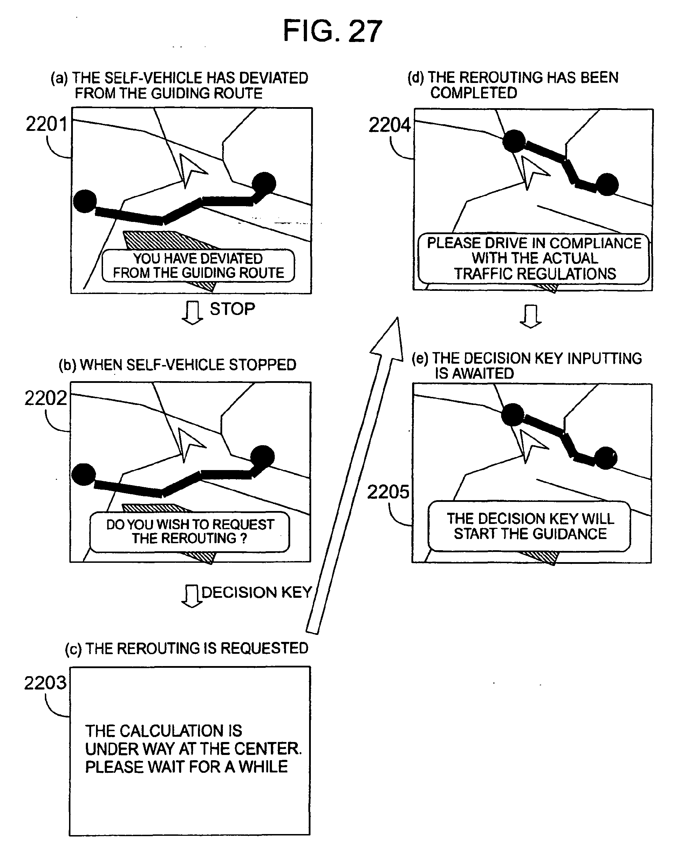

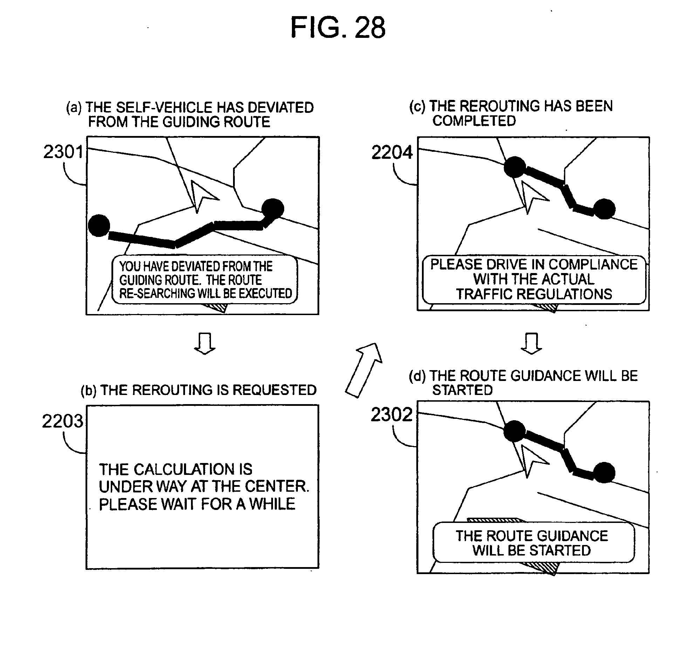

FIG. 27 and FIG. 28 illustrate the picture transition in the case of the rerouting. FIG. 27 illustrates the case where the user stops the self-vehicle and then requests the rerouting. In FIG. 27, if the self-vehicle deviates from the guiding route, there appears a picture 2201. The picture 2201 displays a warning to the effect that the self-vehicle has deviated from the route, but does nothing more during the driving. At a point-in-time where the self-vehicle stops, the navi-terminal displays a picture 2202, thereby making an inquiry of the user as to whether or not to request the rerouting. If the user pushes the decision key of the remote controller, there appears a picture 2203, where the navi-terminal requests the route searching to the navi-server. When the navi-server has finished the route searching, the navi-server transmits the resultant route information to the navi-terminal, which displays a new guiding route as is illustrated on a picture 2204. Finally, there appears a picture 2205, where the user's pushing the decision key starts the route guidance. When the self-vehicle deviates from the route, prompting the user to perform the decision-key inputting during the driving results in a possibility that the user may be much absorbed in the operation of the navi-terminal. This brings about a danger of causing an accident to happen. Consequently, by refraining from prompting the user to perform the decision-key inputting during the driving, it becomes possible to suppress the possibility of an accident down to a low-value.

FIG. 28 illustrates the picture transition in the case of the automatic rerouting. In this case, if the self-vehicle deviates from the route, the rerouting is automatically executed. If the self-vehicle deviates from the route, there appears a picture 2301. Unlike the picture 2201, the picture 2301 displays a notice to the effect that the rerouting will be executed. The navi-terminal requests, to the navi-server, the route searching from the present place to the destination place, and there appears the picture 2203 in the meantime. If the navi-server has finished the route searching, there appears the picture 2204. Finally, there appears a picture 2302, which displays a notice to the effect that the route guidance will be started. In the case of the automatic rerouting, it can be considered that the self-vehicle is in an on-run state. Accordingly, the route guidance is started without prompting the user to perform the decision-key inputting. In the case of the automatic rerouting, since the access is made to the navi-server regardless of the user's will, the communications fee occurs for each access. However, the rerouting is executable without the inputting from the user. This brings about none of the danger that the user may be absorbed in the operation and thereby an accident will be caused to happen.

A voice may also be used as the rerouting method. If the self-vehicle deviates from the guiding route, there appears the picture 2201. At this time, the navi-terminal waits for the user to perform the voice inputting. If the user inputs a voice of "Reroute." with the use of a voice inputting device, there appears the picture 2203, where the navi-terminal requests, to the navi-server, the route searching from the present place to the destination place. When the navi-server has finished the route searching, the navi-server transmits the resultant route information to the navi-terminal, and there appears the picture 2204. Finally, there appears the picture 2302, which starts the route guidance. This method simplifies the inputting into the navi-terminal, and makes it possible to access the navi-server at the user's will.

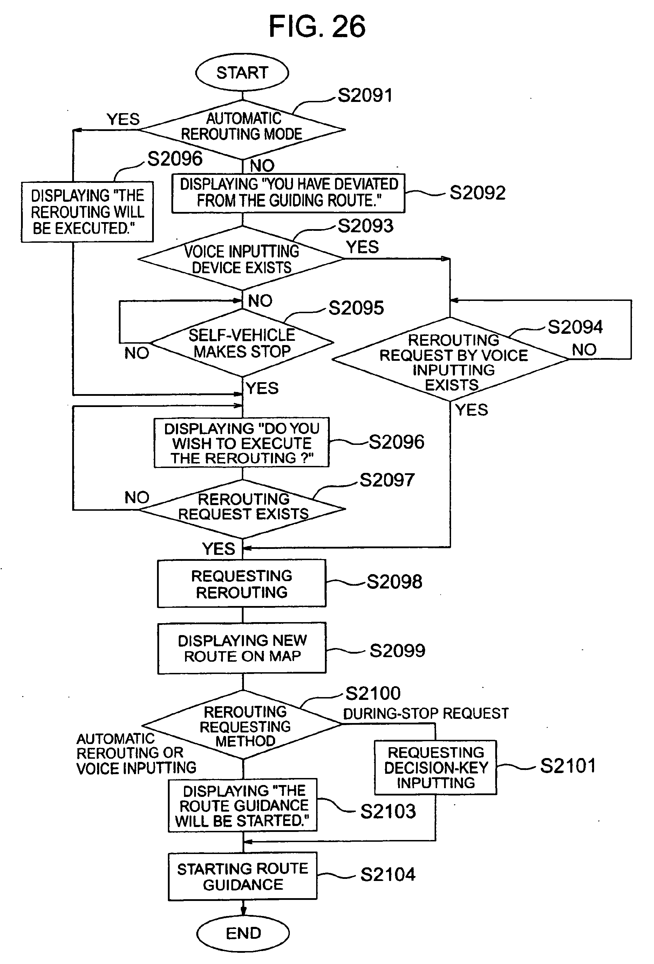

Next, referring to a flow chart illustrated in FIG. 26, the explanation will be given again concerning the above-described processings. If the self-vehicle deviates from the route, the navi-terminal, at a step S2091, judges whether or not the present rerouting mode is the automatic rerouting mode. If the mode is the automatic rerouting mode, the navi-terminal displays, on the picture, the notice of "You have deviated from the guiding route. The route re-searching will be executed." regardless of whether the self-vehicle is in an on-run state or a stop state at a step 2096. This has been just illustrated on the picture 2301. After that, at a step S2098, the navi-terminal requests the rerouting.

In the case of no automatic rerouting, at a step S2092, the navi-terminal displays the notice of only "You have deviated from the guiding route." on the picture. This has been just illustrated on the picture 2201. Next, if, at a step S2093, the navi-terminal judges that there exists the voice inputting device, at a step S2094, the navi-terminal awaits the voice inputting. Moreover, if the user says "Reroute.", "Research.", or the like, at the step S2098, the navi-terminal requests the rerouting to the navi-server.

In the case of being neither the automatic rerouting mode nor the existence of the voice inputting device, the navi-terminal does nothing until the self-vehicle makes a stop while displaying the notice of "You have deviated from the guiding route." on the picture. If, at a step S2095, the navi-terminal judges that the self-vehicle makes the stop, the navi-terminal displays, on the picture, the notice of "Do you wish to execute the rerouting ?", then awaiting the remote-controller inputting from the user. If the decision key is pushed, at the step S2098, the navi-terminal requests the rerouting.

If the rerouting has been requested in accordance with the above-described method, the navi-server transmits the rerouting result. Then, at a step S2099, the navi-terminal displays the new route in a state of being superimposed on the map. This has been just illustrated on the picture 2204. After displaying the new route on the picture, in the case of the automatic rerouting or the above-described rerouting by the voice, the navi-terminal displays the notice of "The route guidance will be started." or the like on the picture, thereby starting the route guidance. In the above-described case where the navi-terminal requests the rerouting after the self-vehicle has made the stop, the navi-terminal displays the notice of "The decision key will start the guidance." or the like. Then, after confirming that the decision key of the remote controller has been pushed, the navi-terminal starts the route guidance. Here, the picture displayed-contents need not necessarily be changed depending on the automatic rerouting request, the by-voice rerouting request, or the after-stopping rerouting request. Even in the case of the after-stopping rerouting request, after downloading the route data from the navi-server, the navi-terminal may start the route guidance without prompting the user to perform the decision-key inputting.

The judgement method of judging whether or not the self-vehicle position has deviated from the route may be made using the following criterions: The self-vehicle position has deviated from the route by 300 meters, or 30 seconds have elapsed since the position deviated from the route.

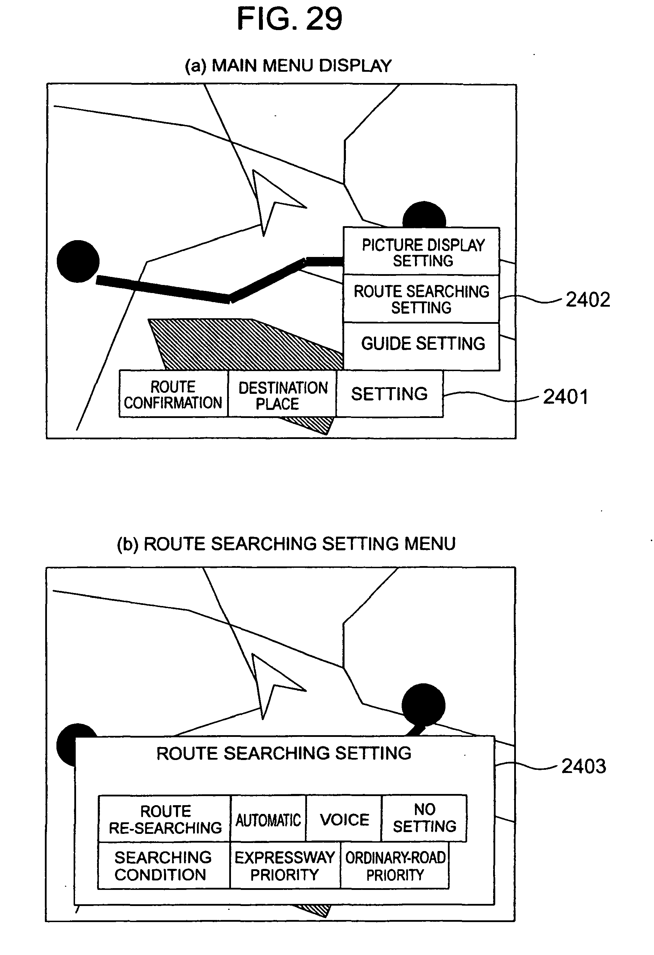

It is possible for the user to set the above-described rerouting modes. In the present embodiment, an example is presented where the user performs the setting by invoking setting pictures using the remote controller. FIG. 29 (a) and FIG. 29 (b) illustrate a main menu at the navi-terminal and a route searching setting menu, respectively. If the user pushes a "menu" key of the remote controller, there is displayed the main menu 2401 in FIG. 29 (a). Moreover, the user's selecting a "setting" out of the main menu 2401 causes a setting menu 2402 to appear. Furthermore, if the user selects a "route searching setting" out of the setting menu 2402, there comes a picture in FIG. 29 (b). At this time, the picture displays the route searching setting menu 2403. The route searching setting menu 2403 includes a "route re-searching" setting menu, which makes it possible to set the rerouting mode. Of this menu, selecting an "automatic" brings about the automatic rerouting mode. Selecting a "voice" brings about the mode for allowing the execution of the by-voice-inputting rerouting request. Selecting "no setting" brings about the mode where the rerouting request can not be made until the stopping.

In addition to the route re-searching" setting menu, the route searching setting menu 2403 includes a "searching condition" setting menu. This menu sets the route searching condition at the time of executing the route searching, allowing the setting of the conditions such as the expressway priority, the general-road priority, the distance priority, and the time priority. Also, the route searching setting menu may also include a menu other than the above-described menus.

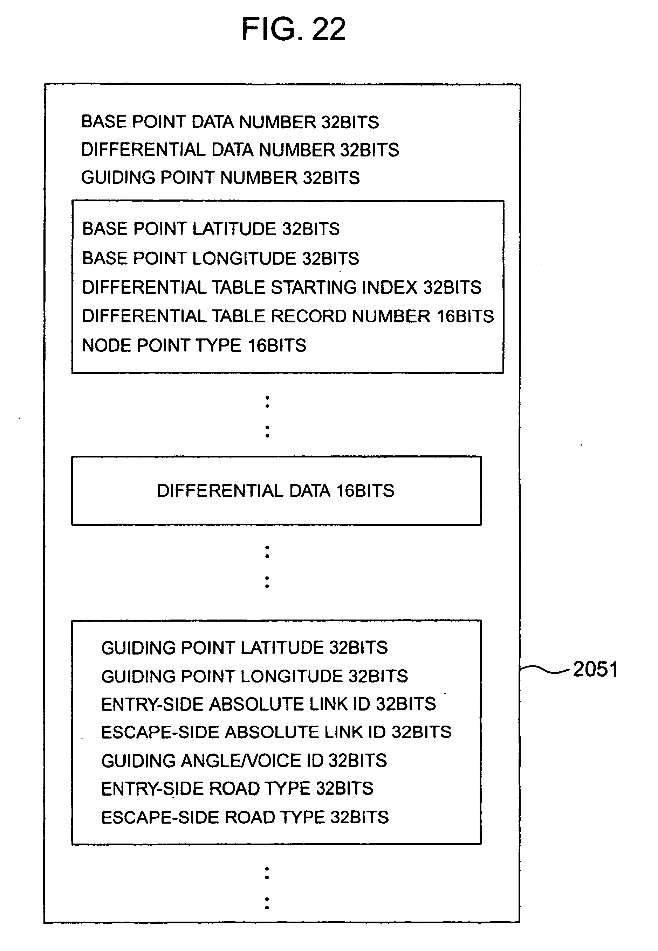

Next, the explanation will be given below regarding the transmitting formats of the route data and the guidance data. As described earlier, it is possible to transmit the route data or the guidance data in the manner of having been included in the HTML. The formats have been exactly illustrated in FIG. 21 and FIG. 22. FIG. 21 illustrates a route HTML 2041 for transmitting the route data to the navi-terminal. FIG. 22 illustrates the format of a route information file 2051. The file name of the route information file 2051 is beforehand described in the <embed> tag within the route HTML 2041. Then, if the navi-terminal receives the route HTML 2041, the navi-terminal downloads the route information file 2051, thereby starting up an application that is appropriate for processing the route information.

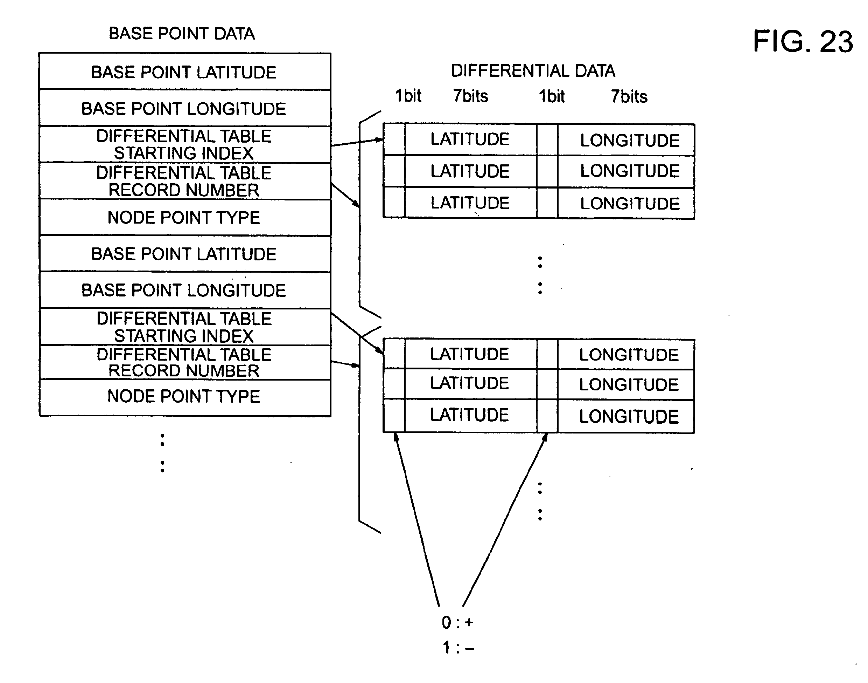

The route information file 2051 includes the route information and the guiding point information. The route information is expressed by base point data becoming a reference and the differences from the base point. FIG. 23 illustrates the relationship between the base point data and the differential data.

The base point data includes the latitude/longitude, a differential table starting index, a differential table record number, and a node point type. Of them, the differential table starting index indicates an index (i.e., position) on the memory where the differential data from the base point has been stored. The differential table record number indicates the number of the differences from the base point. Also, the latitude/longitude is stored in being converted into a numerical value in, e.g., a 1/10th-second unit. Depending on the convenience for the system, the employment of the numerical values is allowable where 16 bits, 8 bits, and 8 bits are assigned to the degree, the minute, and the second, respectively.

The differential data is expressed with 16 bits, where the higher-order 8 bits express the difference in the latitude and the lower-order 8 bits express the difference in the longitude. Also, the respective highest-order bit expresses a plus or a minus notation. It is preferable that the method for expressing this difference should be made identical to the method for expressing the above-described base point.

The base point is not always only one point on the route. Instead, a plurality of points can be the base points. For example, in the present embodiment, since the differences in the latitude/longitude are expressed with 8 bits each and the respective highest-order 1 bit is the notation, only the numerical values of 0 to 127 can be expressed. Consequently, in the case where the value of the difference exceeds 127, a base point is newly created. Also, the base point may be determined depending on the convenience for the system, e.g., a point-of-interest where the road type changes on the route is defined as the base point. Determining the base point in this way results in a reduction in the data amount and a lowering in the communications charge as compared with the case where the latitude/longitude of a pass point on the route are transmitted just as they are.

The guiding point information included in the route information file 2051 includes a voice data ID. The voice data ID means the ID of voice data that the navi-terminal should reproduce when the navi-terminal approaches a guiding point. If the navi-terminal approaches the guiding point, with a voice, e.g., "Please makes a left turn 300 meters ahead." or "Please turn to the left soon.", the navi-terminal informs the user of the direction to which the self-vehicle should make the turn. The navi-server executes the processing of assigning the ID to the voice.

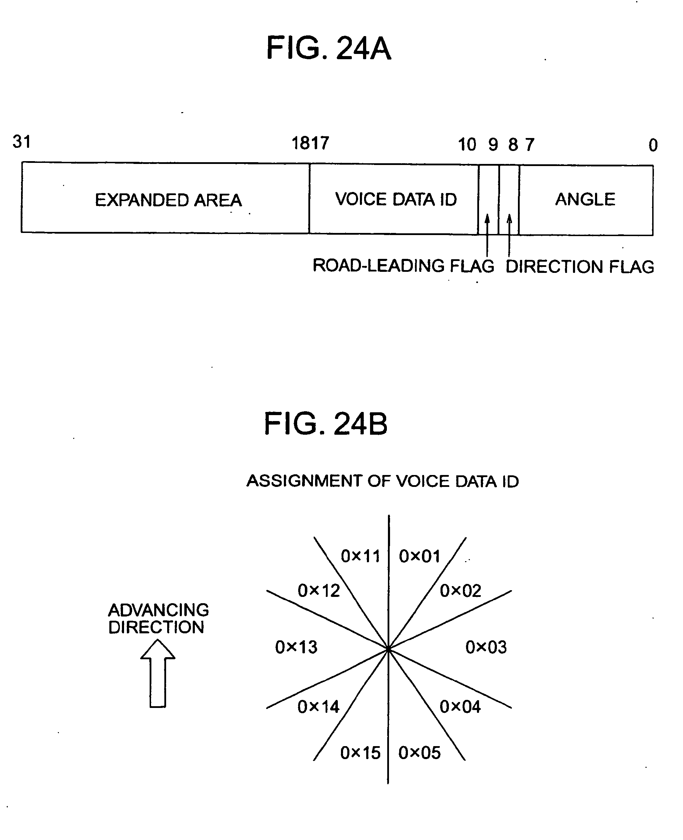

The voice data ID is included in the guiding angle/voice ID in the route data 2051, and its format has been exactly illustrated in FIG. 24A. Incidentally, the unused area may be provided in order to comply with a software expansion at the navi-terminal side. Also, the manner in which the voice data ID is assigned has been exactly illustrated in FIG. 24B. In the present embodiment, there is presented an example where the voice data ID is expressed with hexadecimal two-digit codes. The higher-order 4 bits express the right or the left, and the lower-order 4 bits express the angles.

Incidentally, although, in the present embodiment, the navi-server determines the voice data ID and transmits the ID to the navi-terminal, as is the case with the conventional car navigation system, the navi-terminal side may carry out the processing of determining the voice data ID from the guiding angle.

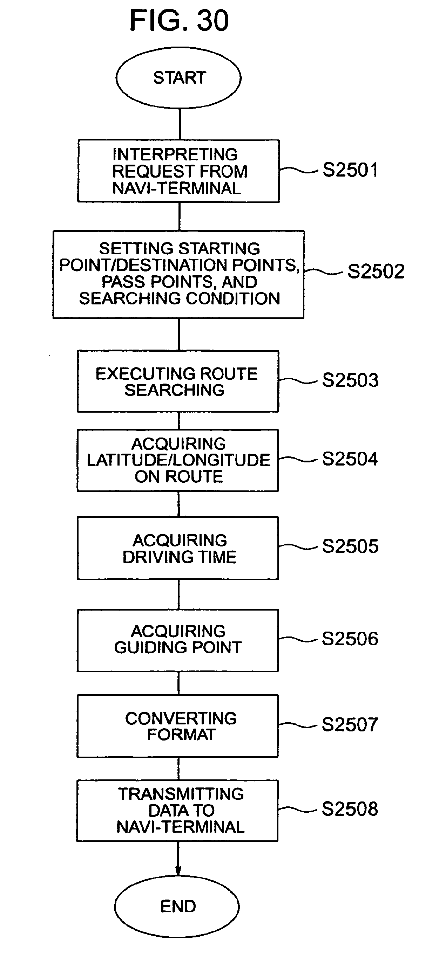

The operations explained in the embodiments so far are the processings that are mainly seen from the navi-terminal side. Next, referring to FIG. 30, the explanation will be given below concerning the processings at the navi-server. Additionally, the software configuration of the navi-server has been already illustrated in FIG. 2, and the explanation thereof has been also just given as described earlier. The navi-server receives various types of requests from the navi-terminal, then starting up an application that is appropriate for the received request. Conversely, although the navi-server can actively issue some type of information to the navi-terminal with the use of the broadcasting or the like, the subject will be omitted here.

At first, the navi-server interprets a request received from the navi-terminal. This request is transferred to the navi-server as the CGI parameter, and, at a step 2501, the CGI 115 interprets this request. The request received from the navi-terminal includes at least the latitudes/longitudes of the starting point/destination point and the latitude/longitude of a pass point in the route searching. Regarding the route searching condition, if the navi-terminal side holds the condition, the navi-terminal may transmit to the navi-server the condition along with the request. Otherwise, the navi-server may store the route searching condition from the beginning. In the latter case, the navi-server makes reference to the optional information database 126 inside the route searching navi-server 116, thereby executing the route searching.

Next, the navi-server, at a step 2502, sets the latitudes/longitudes of the starting point/destination point, the latitude/longitude of the pass point, and the searching condition, then starting the route searching at a step 2503. The output of the route searching includes the latitude/longitude of the pass point, the driving time, the guiding point information, and the like. The CGI 115, at steps 2504 to 2506, acquires these pieces of information from the route searching navi-server 116, then converting the information into the HTML at a step 2507. The formats of this HTML have been just illustrated in FIGS. 21 to 23. Finally, the navi-server transmits this HTML to the navi-terminal, thereby finishing the processings at the navi-server.

The present navi-terminal has the communications function for downloading the map data from the navi-server and a rewritable storage medium utilized as a cache for recording wide-area map data recorded at the time of shipment and the detailed map data acquired via the communications so far. In the case where a map-displaying request for a specified point-of-interest occurs while the navi-terminal is being used, the navi-terminal reads out the map data recorded in the built-in storage medium, thereby displaying the map. If all the necessary data has been not recorded in the storage medium, the navi-terminal issues a map request to the navi-server so as to download and display the map data.

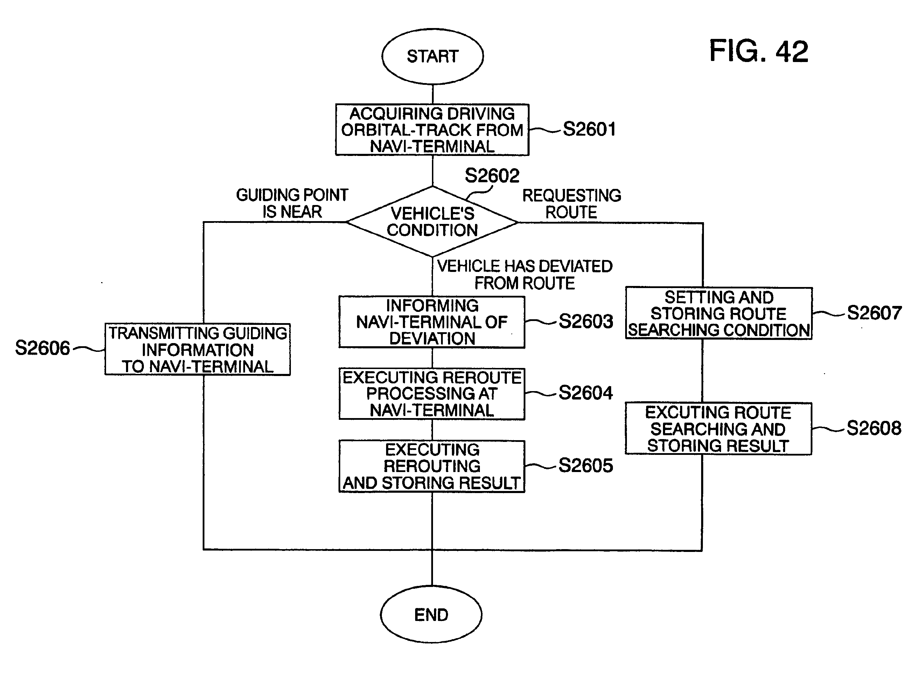

When requesting the route searching, in the case as well where there exists no detailed information in the navi-terminal, the navi-terminal can obtain some level of service. For example, even if the self-vehicle is now in an on-run state at a location whose detailed map does not exists in the navi-terminal, the navi-terminal transmits the driving orbital-track so far to the navi-server simultaneously with the route searching request. Then, the navi-server side processes the driving orbital-track, thereby allowing the navi-terminal to receive some services. The latitudes/longitudes of locations that the self-vehicle has passed so far may be used as the driving orbital-track. Its embodiment will be explained below, referring to FIG. 42.

At a step 2601, the navi-server receives the driving orbital-track and also some other request, if any. The navi-server makes a comparison between the map information stored in the navi-server and the driving orbital-track received, thereby grasping the vehicle condition of the navi-terminal mounting self-vehicle (S2602). At the same time, based on the driving orbital-track, the navi-server can recognize in what place and in what direction the self-vehicle is now being driven. Consequently, when requesting the route searching, the transmission of the driving orbital-track as well as the destination information to the navi-server permits the navi-server to search, at a step 2608, the optimum route about which the advancing direction has been taken into consideration.

The navi-server stores the driving orbital-track transmitted and, at a step 2607, analyses a road type on which the user drives so often. This, at the step 2608, makes it possible to search the route that is appropriate therefor. For example, if it is found that a user drives along national highways so often, when the user issues a route searching request to the navi-server, the navi-server can search the route with a higher-priority given to the national highways. Otherwise, if a user drives on back streets so often instead of driving along wider streets, the navi-server can execute the route searching with a higher-priority given to narrow city streets instead of the national highways or the like, then being capable of returning the result back to the navi-terminal. Moreover, the navi-server stores the route searching condition at that time, and if the same user issues a route searching request the next time or after, the navi-server can execute the route searching on the basis of the same route searching condition.

Also, if the navi-server has stored the route information, it also becomes possible to carry out the route guidance. For example, if the navi-server side finds the navi-terminal coming nearer to a guiding point, at a step 2606, the navi-server can inform the navi-terminal that the guiding point is coming soon and also in which direction the self-vehicle should advance. At that time, the navi-terminal displays the direction in which to advance on the picture with an arrow. In addition, if there exists the voice data in the navi-terminal, the navi-terminal may have the navi-server transmit the voice data ID and may give the voice guidance at the navi-terminal side.

Also, the navi-server has stored the route information on the user, and then makes a comparison between the route information and the driving orbital-track transmitted from the user. This makes it possible to recognize whether or not the self-vehicle position has deviated from the route. If the position has deviated therefrom, the navi-server informs the navi-terminal of a notice to the effect (S2603), and the navi-terminal side carries out the reroute processing (S2604). This has been just as described earlier. After that, if the navi-terminal transfers a rerouting request to the navi-server, at a step 2605, the navi-server may carry out the rerouting and, using its result, may continue the above-described processing stored in the navi-server. At that time, it is also possible to inform the navi-terminal that the position has deviated from the route.

In this way, even when there exists no map in the navi-terminal side, or the navi-terminal fails in downloading the necessary map, the navi-terminal can receive the route guiding service. It can be considered, however, that transmitting, as the driving orbital-track, all the orbital-track data in one driving may increase the communications load. In that case, the communications load can be reduced by the following, for example: In a location where the self-vehicle has been driving almost straight, the orbital-track point-string is thinned out, or the 2-kilometer orbital-track data in the past is transmitted.

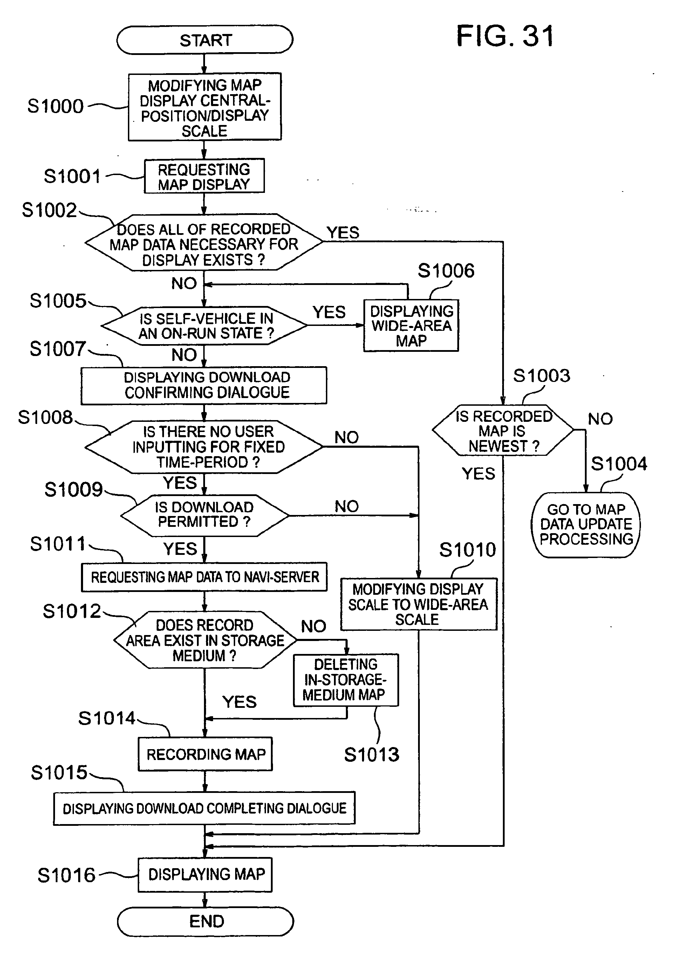

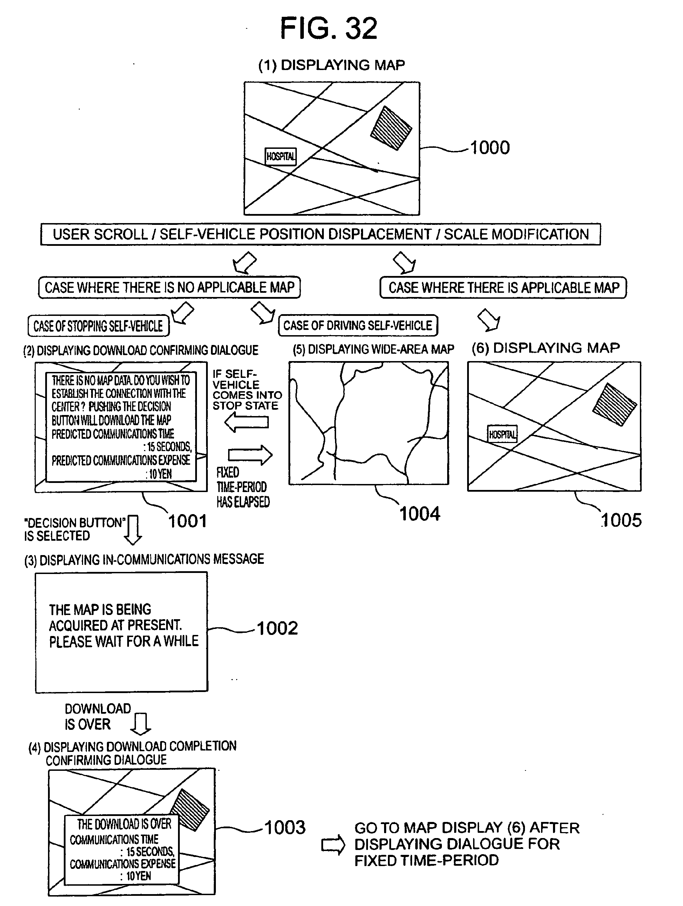

Referring to FIG. 31 that illustrates a map request processing flow at the navi-terminal side and FIG. 32 that illustrates an example of the corresponding picture transition, the detailed explanation will be given below concerning the flow and the example.

At the navi-terminal, if a scroll by the user, an automatic scroll during the self-vehicle driving, and a scale modification by the user, as a trigger (S1000), cause a specified point-of-interest map-displaying request to occur (S1001), it is confirmed whether or not all the map data needed for the display has been recorded in the storage medium (S1002).

When all the map data needed for the display has been recorded in the storage medium, it is confirmed whether or not the recorded map data is the newest data (S1003). If the recorded map data is not the newest, an update processing of the map data is performed (S1004). If the map data is the newest, the map 1005 is displayed just as it is (S1016).

Meanwhile, when all the map data needed for the display has been not recorded in the storage medium, it is confirmed whether or not the self-vehicle is now in an on-run state (S1005). In the case of being in the on-run state, the output of a map download confirming dialogue 1001 is prohibited. Then, a wide-area map 1004 is displayed in such a manner that its scale is made larger up to an extent of being able to be displayed only with the map data recorded in the storage medium (S1006). Moreover, the download confirming dialogue 1001 is displayed after having waited for the self-vehicle to come into a stop state.

In the case where the self-vehicle is in no on-run state, there is displayed the dialogue 1001 for confirming the user as to whether or not the lacked map data should be downloaded from the navi-server (S1007). During the dialogue, a predicted value of the communications fee is displayed. After displaying the dialogue, if the user has performed no inputting for a certain fixed time-period and if the user has not selected the downloading, the display scale is automatically modified (S1010), then displaying the wide-area map 1004.

After having downloaded the map data or the route guidance data, on its each-time basis, the navi-terminal displays the actual communications fee and contents fee. The fees are withdrawn from the credit account or bank account of the user in a monthly unit, then being settled. Also, if the upper-limits of the fees are registered in advance from the navi-terminal into the navi-server, at a point-in-time when the upper-limits are likely to be exceeded, the navi-server informs the navi-terminal of a notice to the effect. This notice makes it unnecessary for the user to worry about too much usage of the downloading. The upper-limit of the communications fee and that of the contents fee can be set independently of each other. Also, an inquiry can be made from the navi-terminal to the navi-server as to about what amount the usage fees have reached, e.g., this month.

At the map download confirming dialogue 1001, if the user selects the downloading, the navi-terminal requests the lacked map data to the navi-server (S1011), then displaying a picture 1002 for notifying that the communications are under way. After the completion of the downloading, it is confirmed whether or not an enough area for recording the downloaded map data exists within the storage medium (S1012). If the enough area exists, the map data is recorded (S1014). If the storage area is lacking, the map data is deleted within the storage medium in the sequence starting from the oldest reference time-and-date (S1013), thereby securing an area for storing the newly downloaded map data. After that, the map data is recorded (S1014). After recording the map, the navi-terminal displays a download completion notice and the cost communications fee at a dialogue 1003 (S1015), then displaying the map 1004 (S1016).

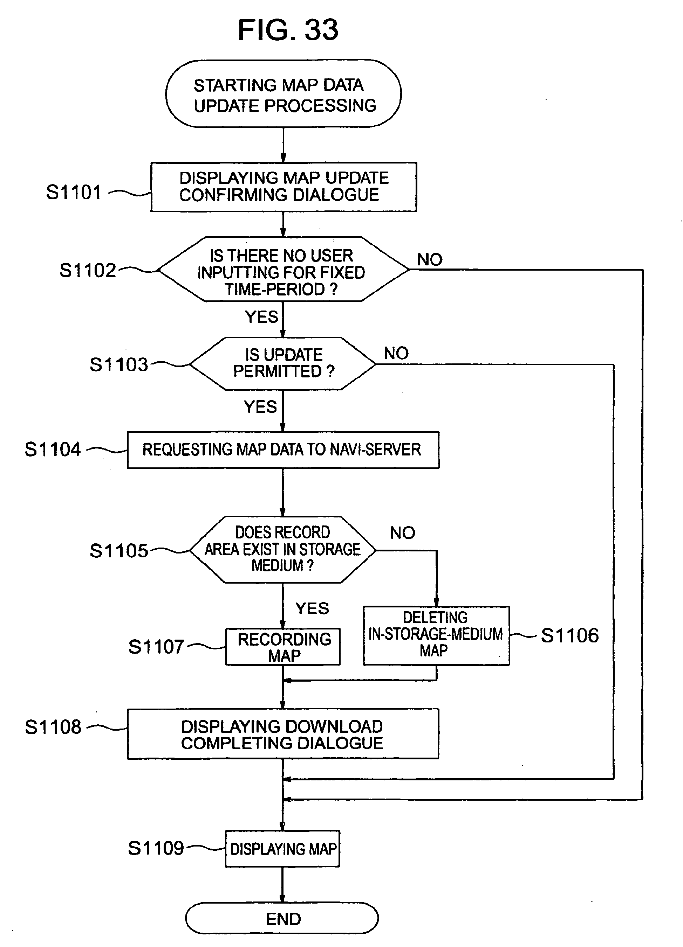

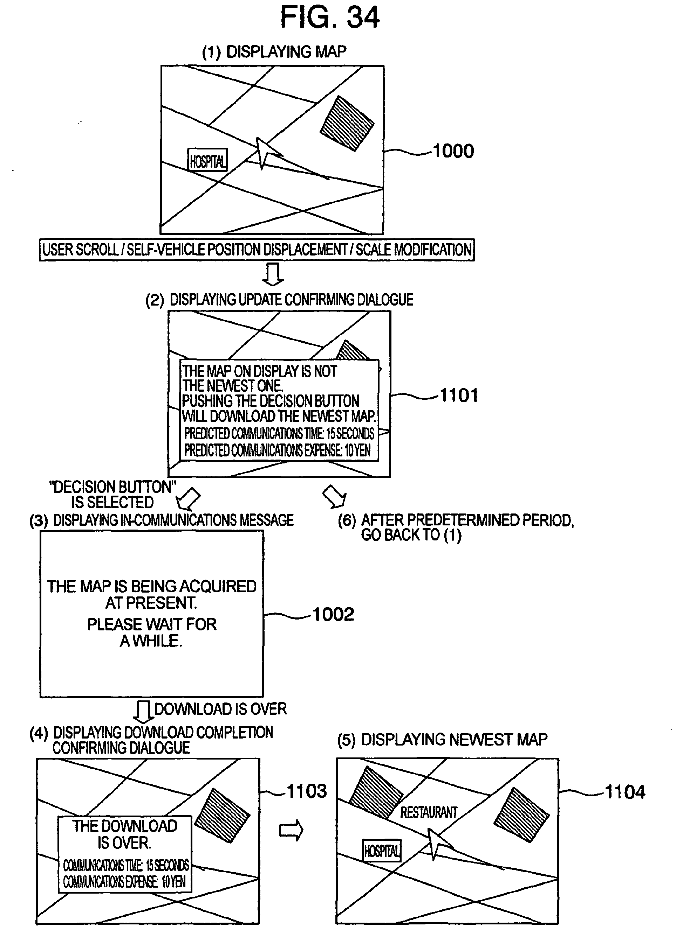

Next, the detailed explanation will be given below regarding the map update processing, referring to FIG. 33 that illustrates the processing flow and FIG. 34 that illustrates an example of the corresponding picture transition. At first, if the map update processing is started (S1004), a map update confirming dialogue 1101 is displayed (S1101). After that, if no inputting has been performed for a certain fixed time-period (S1102) and if the user has not permitted the updating (S1103), the existing map is displayed instead of updating the map (S1109). If the user has permitted the updating, the navi-terminal requests, to the navi-server, the map data on the position, the scale, and the area which are on display at present (S1104). When updating the navi-map, in addition to a scheme of transmitting all the cut-out map data to the navi-terminal, the navi-server can also employ the following scheme: A version that user owns is acquired, then transmitting only differential information between the map data in the version and the map data within the navi-server. What is referred to as "differential information" here includes added road information and point-of-interest information.

Processings (i.e., S1105 to S1108) to be performed after downloading the map data will be omitted, because they are equivalent to the processings (i.e., S1012 to S1015) performed after downloading the map data in the map request processing.

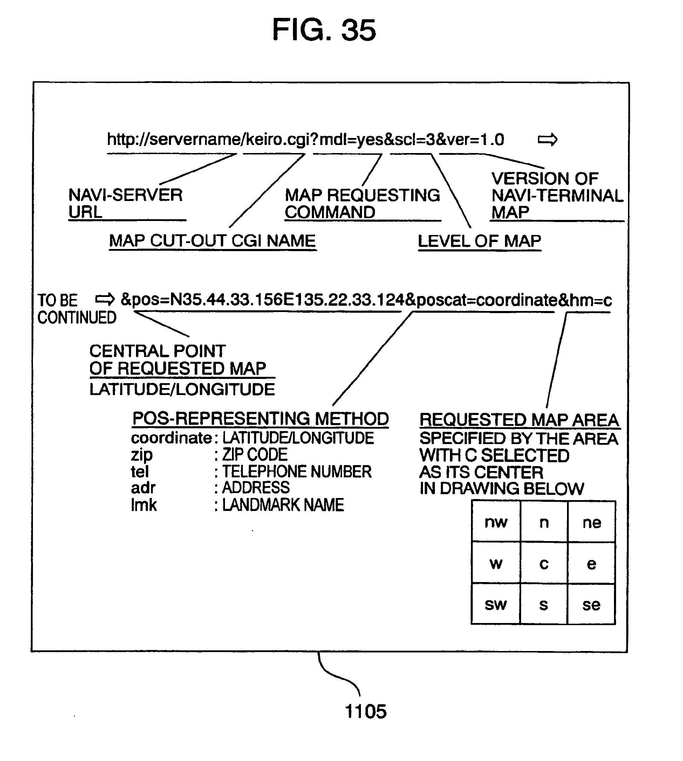

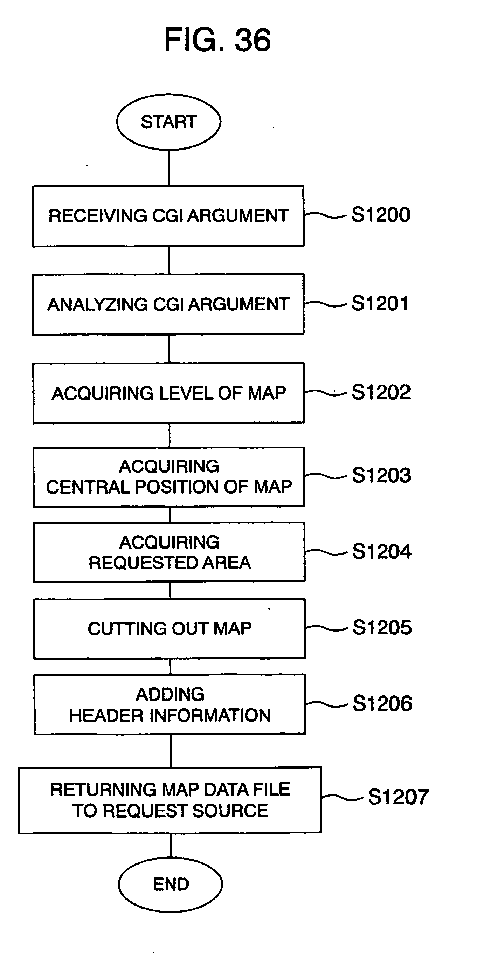

Next, referring to FIG. 35 and FIG. 36, the explanation will be given below concerning the communications scheme between the navi-terminal and the navi-server. In the above-described processing of requesting the lacked map data to the navi-server (S1011), the navi-terminal describes, as arguments of the CGI as illustrated in FIG. 35, the map requesting command, the position of a point-of-interest to be displayed, the expressing method thereof, the scale of the map data, and a requested area, then requesting the map to the navi-server via the Internet. As the method of expressing the point-of-interest to be displayed, any one of the latitude/longitude, the address, the zip code, the telephone number, and the landmark name is selectable.

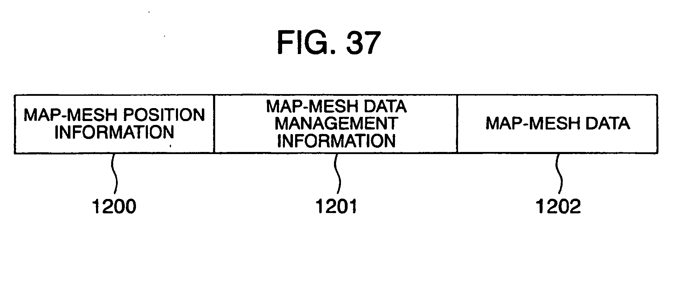

Having received the request (S1200), the navi-server analyzes the arguments of the CGI (S1201), thereby acquiring the level of the map (S1202), the central position of the map (S1203), and the requested area (S1204). After the acquisition, the navi-server cuts out the determined map data from the map database (S1205), and adds a header thereto (S1206), then transmitting the map data to the navi-terminal, i.e., the request source (S1207). FIG. 37 illustrates the file format to be transmitted. The file format to be transmitted includes map-mesh position information 1200, map-mesh data management information 1201, and map-mesh data 1202. The map-mesh position information 1200 includes the center of the cut-out map-mesh data. The map-mesh data management information 1201 includes the size of the map-mesh data. The map-mesh data 1202 includes the background data, the road configuration data, the road type data, and the name data for displaying the map.

Next, the description will be given below regarding a scheme of notifying the updating of the in-navi-server map database. With any one of the timings described below, the navi-terminal notifies the user of whether or not to update the map. After the notice, if the user permits the updating, the navi-terminal performs the above-described map update processing,
1) at the time of displaying the map
   When displaying the map, it is confirmed whether or not the map data to be used is the newest data. The confirmation as to whether or not the data is the newest is performed as follows: The data stored within the storage medium is read out, and then a comparison is made between the data's version and the in-navi-server map information that the navi-terminal has acquired in advance from the navi-server. The navi-server-side map information that the navi-terminal holds here includes the version of the entire map database and the version on each map-mesh basis. The navi-server-side map information is acquired from the navi-server when the connection is first established with the navi-server after the use of the present navi-terminal was started, or on a certain fixed time-period basis. This makes it possible to update only the updated map-mesh.
2) at the time of modifying the in-navi-server map
   When the map database is updated at the navi-server, the navi-server notifies the user of an updated area via the navi-terminal. If the user wishes to update the map data on the notified area, the user performs the communications so as to download the new map.
3) at the time of having updated the user-held data out of the map data on the navi-server
   The navi-server has managed beforehand the version of the map data held by the user in a map-mesh unit. If, of the map data held by the user, map data in a certain area is updated, the navi-server, via the navi-terminal, notifies the user that the map data has been updated.

When performing the downloading, there is transmitted only differential information between the data held by the user and the in-navi-server data. What is referred to as "differential information" here includes added road information and point-of-interest information. In this scheme, the navi-terminal periodically notifies the navi-server of the map data held by the user and the version thereof.

In the method described so far, although, when acquiring the map from the navi-server, the confirmation has been performed toward the user without fail, modifying the setting of the navi-terminal makes it possible to download the map automatically.

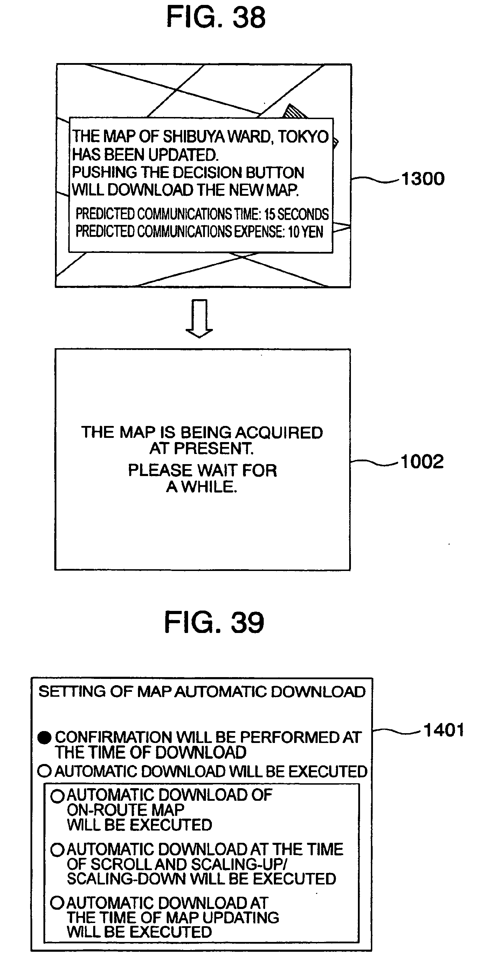

FIG. 39 illustrates a setting-modifying picture regarding the map download. The user can select either "confirmation will be performed at the time of download" or "automatic download will be executed". If "confirmation will be performed at the time of download" is selected, just as described so far, the download confirming dialogue is displayed without fail at the time of the communications. If "automatic download will be executed" on the setting picture is selected, the communications will be started without displaying the dialogue, thereby downloading the map data. Moreover, by checking, on the setting picture, checking buttons of "automatic download of on-route map will be executed", "automatic download at the time of scroll and scaling-up/scaling-down will be executed", or "automatic download at the time of map updating will be executed.", it becomes possible to select the case where an automatic download is wished to be executed.

If "The automatic download of the on-route map will be executed." is selected, during the route guidance and within the map data in the destination-place direction from the self-vehicle position on the route, the map data that does not exist within the built-in storage medium is retrieved, thereby downloading the map data automatically.

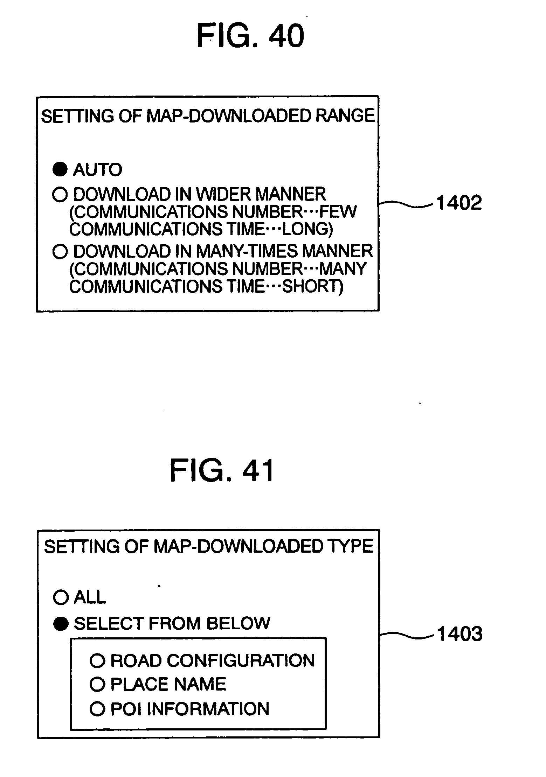

Next, the explanation will be given regarding an area setting at the time of downloading the map. A map downloaded-area setting picture in FIG. 40 makes it possible to modify the setting of a map area subjected to the area-set downloading in the map to be downloaded. The setting is selectable from among "auto", "download in wider manner", and "download in many-times manner".

If "auto" is selected, depending on the driving state, the navi-terminal dynamically modifies the map area to be downloaded. For example, the map area to be downloaded is made larger during a high-speed driving, thereby making it possible to decrease the number of the communications per a fixed time-period.

Next, the explanation will be given regarding a scheme where the downloading is performed in a mode of selecting a configuration element within the map information. Although the map database within the navi-server includes the plurality of elements such as the road configuration, the background, the place name, and the point-of-interest name, all the information are not necessarily needed in displaying the map. Acquiring all the information from the navi-server allows the detailed information to be displayed, but necessitates the communications fee. Accordingly, in the present embodiment, a setting picture illustrated in FIG. 41 makes it possible to select a map element to be downloaded.

The present invention allows the communications-type car navigation system to be implemented with a small data transfer amount. Also, the present invention permits the implementation of the communications-type car navigation system that brings about an enhancement in the driving safety and the driving operability.

It should be further understood by those skilled in the art that the foregoing description has been made on the embodiments of the present invention and that various changes and modifications may be made in the invention without departing from the scope of the appended claims.

## Claims

1. A communications-type navigation device, comprising:
position measuring means for measuring a position of a self-terminal device (132),
destination place setting means for setting destination place information,
communications means for performing transmission/reception of data with an information center (107), and
route guiding means for performing route guidance to said destination place, wherein
said communications means is adapted to transmitting, to said information center (107), present place information obtained by said position measuring means and said destination place information, and receiving, from said information center (107), route information and guiding point information up to said destination place which have been transmitted to said information center (107), and
said route guiding means uses said received route information and guiding point information so as to execute guidance to said destination place,
**characterised in that**
said device further comprises guiding-mode type specifying means for specifying a guiding-mode type employed for said guidance in said route guidance,
said communications means is adapted to further transmitting to said information center (107), besides said present place information and said destination place information, said guiding-mode type, and receiving guiding point information related to said specified guiding-mode type, and
said route guiding means is adapted to executing said guidance to said destination place by using said received route information and said guiding point information related to said specified guiding-mode type.

2. An information center (107), comprising:
communications means for performing transmission/reception of data,
route information calculating means for creating route information by calculating an optimum route from position information an a starting place and a destination place, and
guiding point information calculating means for creating guiding point information by making reference to said calculated route so as to extract a guiding point at which an advancing course is to be modified,
**characterised in that**
said guiding point information calculating means is adapted to judging a guiding-mode type in correspondence with a road configuration at said guiding point, and thereby creates said guiding point information related to said judged guiding-mode type.

3. The information center (107) as claimed in Claim 2, wherein said guiding point information calculating means judges said guiding-mode type in correspondence with a degree of complexity of said road at said guiding point, and thereby creates said guiding point information including said judged guiding-mode type.

4. The information center (107) as claimed in Claim 2, wherein said guiding point information calculating means judges said guiding-mode type in correspondence with a type of a road connected to said guiding point, and thereby creates said guiding point information including said judged guiding-mode type.

5. The information center (107) as claimed in Claim 2, further comprising user managing means (111) for managing a user who establishes a connection therewith, guiding-mode type storing means for storing said guiding-mode type on each user basis, and guiding mode type setting means for setting said guiding-mode type, wherein
said guiding point information calculating means refers to said guiding-mode type stored in said guiding-mode type storing means, and thereby creates said guiding point information including said guiding-mode type to which said reference has been made.

6. The information center (107) as claimed in Claim 2, wherein, when an intersection point enlarged-view is selected as said guiding-mode type, said
guiding point information calculating means creates, as said guiding point information, a guiding point map obtained by extracting a map in a predetermined range including said guiding point, said enlarged-view displaying a guiding direction in a state of being superimposed on said map in a neighborhood of said guiding point.

7. The device as claimed in Claim 1, wherein, when an intersection point enlarged-view is selected as said guiding-mode type, said route guiding means creates a guiding point map obtained by extracting a map in a predetermined range including said guiding point and position information on said guiding point, said enlarged-view displaying a guiding direction in a state of being superimposed on said map in a neighborhood of said guiding point.

8. The device as claimed in Claim 7, wherein a judgement is made as to whether or not said map in said predetermined range including said guiding point and said position information on said guiding point has been updated, and, if it is judged that said map has been updated, a request for creating said intersection point enlarged-view at said guiding point is transmitted to said information center (107).

9. The device as claimed in Claim 1, wherein said route guiding means includes map confirming means, said map confirming means judging whether or not, when an intersection point enlarged-view is selected as said guiding-mode type, there has been stored map information needed for creating said intersection point enlarged-view at a position of said guiding point, said enlarged-view displaying a guiding direction in a state of being superimposed on said map in a neighborhood of said guiding point.

10. The device as claimed in Claim 9, wherein, if said map confirming means has judged that there has been stored said map information needed for creating said intersection point enlarged-view at said position of said guiding point, said route guiding means will create a guiding point map obtained by extracting a map in a predetermined range including said guiding point and position information on said guiding point, and, if said map confirming means has judged that there has been stored none of said map information, said route guiding means creates a guidance information drawing for displaying a guiding direction.

11. The device as claimed in Claim 9, wherein, if said map confirming means has judged that there has been stored none of said map information needed for creating said intersection point enlarged-view at said position of said guiding point, said route guiding means transmits, to said information center (107), a request for creating said intersection point enlarged-view at said guiding point.

12. The device as claimed in Claim 9, wherein, if said map confirming means has judged that there has been stored none of said map information needed for creating said intersection point enlarged-view at said position of said guiding point, said route guiding means transmits, to said information center (107), a request for creating map information including said guiding point.

13. The device as claimed in claim 1, further comprising:
driving state monitoring means for monitoring a driving state of a self-vehicle (102), wherein
said route guiding means includes means for judging whether or not said self-terminal device (132) has deviated from said route from said received route information and said position information measured by said position measuring means, and means for determining, if said self-terminal device (132) is judged to have deviated, whether or not to request said information center (107) to perform a route calculation to said destination place in correspondence with said driving state detected by said driving state monitoring means.

14. The device as claimed in Claim 13, wherein said route guiding means includes said means for judging whether or not said self-terminal (132) has deviated from said route from said received route information and said position information measured by said position measuring means, and means for judging, if said self-terminal (132) is judged to have deviated, whether or not said self-terminal (132) is in an on-run state, and for prohibiting, if said self-terminal (132) is in said on-run state, said route calculation to said destination place from being requested to said information center (107).

15. The device as claimed in Claim 14, wherein said route guiding means further includes means for judging that said self- vehicle (102) has changed from said on-run state into a stop state so as to confirm a user as to whether or not to request said information center (107) to perform said route calculation to said destination place.

16. The device as claimed in Claim 13, wherein said route guiding means provides a mode of automatically requesting said information center (107) to perform said route calculation to said destination place when said self-terminal (132) has deviated from said route, and a mode of confirming a user as to whether or not to request said information center (107) to perform said route calculation to said destination place when said self-terminal (132) has deviated from said route.

17. The device as claimed in Claim 13, further comprising voice outputting means and voice recognizing means, wherein
said route guiding means talks to a user, with a voice, as to whether or not to request said information center (107) to perform said route calculation to said destination place when said self-terminal (132) has deviated from said route, and recognizes a user instruction by said voice recognizing means, and determines, from said recognized result, whether or not to request said information center (107) to perform said route calculation to said destination place.

18. The device as claimed in Claim 1, further comprising orbital-track storing means for storing orbital-track information on said position of said self-terminal device (132) measured by said position measuring means, wherein
said communications means transmits, to said information center (107), said present place information obtained by said position measuring means, said destination place information, and said orbital-track information on said self-terminal device (132) up to directly before said present place, and receives said route information and said guiding point information up to said destination place which have been transmitted from said information center (107).

19. The information center (107) as claimed in claim 2,
wherein
said route information calculating means makes a comparison between orbital-track information on a position of a requester and road map information so
as to determine a road an which said requester is positioned and an advancing direction thereof, said orbital-track information being received by said communications means, and further, calculates said optimum route from said position information an said destination place obtained by said communications means, and thereby creates said route information.

20. The information center (107) as claimed in Claim 19,
further comprising means for storing said orbital-track information an said position an each requester basis, said orbital-track information being received by said communications means,
said route information calculating means analyzing utilization-frequencies of roads that each requester utilizes from said orbital-track information an said position an each requester basis, and lowering a cost parameter of a road whose utilization-frequency is high, and thereby creating, as said route information, said high utilization-frequency road with a high priority.

21. The device as claimed in claim 1, further comprising:
storing means for storing said received data, and
map displaying means (130) for displaying a map,
wherein said communications means transmits, to an information center (107), a map request for specifying position information and scale information, said storing means storing said map data transmitted from said information center (107), said map displaying means (130) displaying said stored map data.

22. The device as claimed in Claim 21, further comprising:
map requesting means for issuing a map information request to said information center (107), and
driving state judging means for differentiating a driving state of a vehicle,
said map requesting means determining whether or not to communicate said map request in correspondence with said driving state of said vehicle acquired by said driving state judging means.

23. The device as claimed in Claim 22, wherein said map requesting means judges whether or not said driving state of said vehicle acquired by said driving state judging means is an on-run state, said map requesting means prohibiting said map request if said driving state is said on-run state.

24. The device as claimed in Claim 23, wherein said map requesting means determines whether or not to issue said map request if said driving state of said vehicle has changed to a stop state.

25. The device as claimed in Claim 23, wherein, if said vehicle state is said on-run state and if a map needed for displaying an equally-scaled map an a present place's periphery has been not stored in said storing means, said map displaying means (130) displays a wide-area map stored in said storing means.

26. The device as claimed in Claim 21, wherein said communications means makes a comparison between an updating time-and-date of said map information recorded in said storing means and an updating time-and-date of map information corresponding to the same map recorded in said information center (107), and thereby monitors whether or not said map information has been updated.

27. The device as claimed in Claim 26, wherein said comparison is made between said updating time-and-date of said map in said information center (107) and said updating time-and-date of said stored map, and, if said map in said information center (107) is judged to have been updated, said map updating is notified with a picture or a voice.

28. The device as claimed in Claim 27, wherein, if said map in said information center (107) has been updated, differential information of said updated map is received, and said
map information is updated from said map information recorded in said storing means and said differential information.

29. The device as claimed in Claim 21, wherein said map displaying means (130) stores said map acquired by said communications means and, if map information at a predetermined position is requested, said means (130) judges whether or not said map information has been stored in said storing means, said means (130), if stored, reading out said map information from said storing means, and if not stored, requesting said map to said information center (107).

30. The device as claimed in Claim 29, wherein said storing means judges whether or not there exists a storage area for storing said received map information and, if said storage area is judged to be lacking, said storing means deletes already existing map information therein in a sequence starting from its oldest reference time-and-date, and stores said received map information.

31. The information center (107) as claimed in claim 2, further comprising:
map storing means for storing a map, and
map cutting-out means (124) for cutting out map data from position information and scale information, wherein
said information center (107) manages and stores an identification number of a user who makes a map data cutting-out request, said cut-out map area, and updated information on said map information.

32. The information center (107) as claimed in Claim 31, wherein, when said map in said information center (107) has been updated, by retrieving said identification number of said user to whom said map in said updated map area has been transmitted, said user is informed of said updating of said map in said information center (107).

33. The information center (107) as claimed in Claim 32, wherein, when delivering said updated map, differential information of said map is delivered.

34. The information center (107) as claimed in claim 2,
wherein
said communications means is adapted to judging that route guidance information has been requested, and adding said route guidance information to said guiding point information and said route information, and further creating route guidance data to which link information for making reference to said route information from said guiding point information has been added, said communications means then transmitting said route guidance data to a request source.

35. The information center (107) as claimed in Claim 34, wherein said route information is created by searching said optimum route from said position information on said starting place and said destination place, and by converting the optimum route into data where said latitudes/longitudes of said points are arranged in necessary number as route searching data.

36. The information center (107) as claimed in Claim 34, wherein said route information is created by searching said optimum route from said position information on said starting place and said destination place, and by calculating differences of said points from latitudes/longitudes of points before and behind said points, and converting said differential data into data where said differences are arranged in necessary number as route searching data.

37. The information center (107) as claimed in Claim 35, wherein said route information has means for selecting a route of a predetermined road type, said route information also converting said route data of said selected road type into data where said route data are arranged in necessary number.

38. The information center (107) as claimed in Claim 34, wherein said route information is created by searching said optimum route from said position information an said starting place and said destination place, by converting link data into data where said link data are arranged in necessary number as route searching data, an ID that is unique for each road connecting two intersection points being attached to said link data.

39. The information center (107) as claimed in Claim 34, wherein said guiding point information includes information of any one of or a combination of guiding point map data obtained by extracting a map in a predetermined range including said guiding point, guiding arrow data for indicating a direction of a road to enter at said guiding point, and guiding voice data for guiding, with a voice, said road to enter at said guiding point.

40. The information center (107) as claimed in Claim 39, wherein, in said creation of said guiding point map data, said guiding point information calculating means differentiates a type of said road to enter at said guiding point and, in correspondence with said road type judged, determines an area where said guiding point map data should be created.

41. The information center (107) as claimed in Claim 39, wherein said guiding point information calculating means creates said guiding arrow data, said guiding arrow data including position information on said guiding point, said road type of said road to enter at said guiding point and that of a road to leave thereat, and an angle formed between said road to enter and said road to leave.

42. The information center (107) as claimed in Claim 39, wherein said guiding point information calculating means creates said guiding voice data including position information on said guiding point and voice guidance data.

43. The information center (107) as claimed in claim 2, wherein it is judged that route guidance information has been requested, said optimum route being searched from said position information on said starting place and said destination place, said route information converted into schematic configuration data being
transmitted to a request source, said route guidance information including said guiding point information and said route information being transmitted if further detailed route information is requested.

44. The information center (107) as claimed in claim 2, further comprising:
route history storing means for storing route information and guidance information requested in a past on each user Basis, and said route information calculated from said starting place at which each user had started and said destination place extract route information that differs from said route information stored in said route history storing means, said extracted route information and guiding point information corresponding thereto being then transmitted.

45. The information center (107) as claimed in Claim 44, wherein it is judged whether or not a researching of said route has been requested, and if said re-searching is judged to have been requested, a route is extracted where said first searching result and said re-searching result differ from each other, said extracted route information and guiding point information corresponding thereto being then transmitted.

46. The information center (107) as claimed in Claim 44, wherein it is judged whether or not a route searching of a return route has been requested, and if said route searching of said return route is judged to have been requested, a route is extracted where said route searching results differ between said approach route and said return route, said route information an said extracted return route and guiding point information corresponding thereto being then transmitted.

47. The information center (107) as claimed in claim 2, further comprising:
means for storing a map database, and
map extracting means for extracting, from position information and scale information, map data in a predetermined area including said position, wherein said map extracting means further includes means for extracting and editing map information with a predetermined attribute in correspondence with a utilization purpose of said map.

48. The information center (107) as claimed in Claim 47, wherein said map extracting means includes, as said means for extracting and editing said map
information with said predetermined attribute, means for creating a road configuration and means for creating a connection relationship between said road configuration and said road.

49. The device as claimed in Claim 1, wherein, if route guidance information to said destination place has been requested, a predicted data size needed for said communications is calculated from a position relationship between said present place information obtained by said position measuring means and said destination place information, a result of calculating, from said data size, a communications fee needed for said communications being then outputted with a voice or an image.

50. The communications-type navigation device as claimed in Claim 1, wherein,
said communications means transmits, to said information center (107), said present place information obtained by said position measuring means and said destination place information, and receives a data size of said route information and said guiding point information up to said destination place which have been transmitted from said information center (107), said communications means also calculating, from said received data size, a communications fee needed for said communications, and outputting said communications fee with a voice or an image.

51. The device as claimed in Claim 1, wherein,
said communications means transmits, to said information center (107), said present place information obtained by said position measuring means and said destination place information and measures its transmitted data amount, and receives said route information and said guiding point information up to said destination place which have been transmitted from said information center (107) and measures its received data amount, and outputs, with a voice or an image, a communications fee needed for said communications from said transmitted data amount and said received data amount measured.

52. The device as claimed in Claim 21, wherein,
said communications means transmits, to said information center (107), said map request for a map in a predetermined area including a predetermined point, and receives a data size of said map transmitted from said information center (107), said communications means also calculating, from said received data size, a communications fee needed for said communications, and outputting said communications fee with a voice or an image.

53. The device as claimed in Claim 21, wherein,
said communications means transmits, to said information center (107), said map request for a map in a predetermined area including a predetermined point and measures its transmitted data amount, and receives said map information transmitted from said information center (107) and measures its received data amount, and outputs, with a voice or an image, a communications fee needed for said communications from said transmitted data amount and said received data amount measured.

## Patentansprüche

1. Kommunikationstyp-Navigationsvorrichtung mit:
einer Positionsmesseinrichtung zum Messen einer Position einer Eigenendgerätvorrichtung (132),
einer Zielort-Einstelleinrichtung zum Einstellen von Zielortinformation,
einer Kommunikationseinrichtung zum Durchführen der Übertragung/des Empfangs von Daten mit einem Informationszentrum (107), und
einer Routenführungseinrichtung zum Durchführen einer Routenführung an den Zielort, wobei
die Kommunikationseinrichtung dazu ausgelegt ist, an das Informationszentrum (107) aktuelle Ortsinformation, die durch die Positionsmesseinrichtung erhalten wird, und die Zielortinformation zu übertragen und von dem Informationszentrum (107) Routeninformation und Führungspunktinformation bis an den Zielort zu empfangen, die an das Informationszentrum (107) übertragen worden sind, und
die Routenführungseinrichtung die empfangene Routeninformation und Führungspunktinformation verwendet, um eine Führung an den Zielort auszuführen,
**dadurch gekennzeichnet, dass**
die Vorrichtung ferner eine Führungsmodustyp-Spezifizierungseinrichtung zum Spezifizieren eines Führungsmodustyps umfasst, der für die Führung in der Routenführung verwendet wird,
die Kommunikationseinrichtung dazu ausgelegt ist, ferner an das Informationszentrum (107) neben der aktuellen Ortsinformation und der Zielortinformation den Führungsmodustyp zu übertragen und Führungspunktinformation zu empfangen, die den spezifizierten Führungsmodustyp betrifft, und
die Routenführungseinrichtung dazu ausgelegt ist, die Führung an den Zielort durch Verwendung der empfangenen Routeninformation und Führungspunktinformation auszuführen, die den spezifizierten Führungsmodustyp betrifft.

2. Informationszentrum (107) mit:
einer Kommunikationseinrichtung zum Durchführen der Übertragung/des Empfangs von Daten,
eine Routeninformations-Berechnungseinrichtung zum Erzeugen von Routeninformation durch Berechnen einer optimalen Route aus der Positionsinformation über einen Startort und einen Zielort, und
einer Führungspunktinformations-Berechnungseinrichtung zum Erzeugen von Führungspunktinformation durch Bezugnahme auf die berechnete Route, um einen Führungspunkt zu extrahieren, an welchem ein vorrückender Kurs zu modifizieren ist,
**dadurch gekennzeichnet, dass**
die Führungspunktinformations-Berechnungseinrichtung dazu ausgelegt ist, einen Führungsmodustyp in Übereinstimmung mit einer Straßenkonfiguration an dem Führungspunkt zu beurteilen und dadurch die Führungspunktinformation erzeugt, die den beurteilten Führungsmodustyp betrifft.

3. Informationszentrum (107) nach Anspruch 2, wobei die Führungspunktinformations-Berechnungseinrichtung den Führungsmodustyp in Übereinstimmung mit einem Komplexitätsgrad der Straße an dem Führungspunkt beurteilt und dadurch die Führungspunktinformation erzeugt, die den beurteilten Führungsmodustyp einschließt.

4. Informationszentrum (107) nach Anspruch 2, wobei die Führungspunktinformations-Berechnungseinrichtung den Führungsmodustyp in Übereinstimmung mit einem Typ einer Straße beurteilt, die mit dem Führungspunkt verbunden ist, und dadurch die Führungspunktinformation erzeugt, die den beurteilten Führungsmodustyp einschließt.

5. Informationszentrum (107) nach Anspruch 2, ferner mit einer Benutzerverwaltungseinrichtung (111) zum Verwalten eines Benutzers, der eine Verbindung mit dieser herstellt, einer Führungsmodustyp-Speichereinrichtung zum Speichern des Führungsmodustyps auf jeder Benutzerbasis und einer Führungsmodustyp-Einstelleinrichtung zum Einstellen des Führungsmodustyps, wobei
sich die Führungspunktinformations-Berechnungseinrichtung auf den Führungsmodustyp bezieht, der in der Führungsmodustyp-Speichereinrichtung gespeichert ist, und dadurch die Führungspunktinformation erzeugt, die den Führungsmodustyp einschließt, auf welchen der Bezug genommen worden ist.

6. Informationszentrum (107) nach Anspruch 2, wobei, wenn eine Schnittpunkt-Vergrößerte-Ansicht als der Führungsmodustyp ausgewählt wird, die Führungspunktinformations-Berechnungseinrichtung als die Führungspunktinformation eine Führungspunktkarte erzeugt, die durch Extrahieren einer Karte in einem vorgegebenen Bereich erhalten wird, der den Führungspunkt einschließt, wobei die vergrößerte Ansicht eine Führungsrichtung in einem Zustand anzeigt, in dem sie der Karte in der Umgebung des Führungspunkts überlagert ist.

7. Vorrichtung nach Anspruch 1, wobei, wenn eine Schnittpunkt-Vergrößerte-Ansicht als der Führungsmodustyp ausgewählt wird, die Routenführungseinrichtung eine Führungspunktkarte erzeugt, die durch Extrahieren einer Karte in einem vorgegebenen Bereich erhalten wird, der den Führungspunkt und Positionsinformation über den Führungspunkt einschließt, wobei die vergrößerte Ansicht eine Führungsrichtung in einem Zustand anzeigt, in dem sie der Karte in einer Umgebung des Führungspunkts überlagert ist.

8. Vorrichtung nach Anspruch 7, wobei eine Beurteilung erfolgt, ob die Karte in dem vorgegebenen Bereich, der den Führungspunkt und die Positionsinformation über den Führungspunkt einschließt, aktualisiert worden ist oder nicht, und, wenn beurteilt wird, dass die Karte aktualisiert worden ist, eine Anforderung zur Erzeugung der Schnittpunkt-Vergrößerten-Ansicht an dem Führungspunkt an das Informationszentrum (107) übertragen wird.

9. Vorrichtung nach Anspruch 1, wobei die Routenführungseinrichtung eine Kartenbestätigungseinrichtung einschließt, wobei die Kartenbestätigungseinrichtung beurteilt, wenn eine Schnittpunkt-Vergrößerte Ansicht als der Führungsmodustyp ausgewählt ist, ob Karteninformation gespeichert worden ist oder nicht, die zum Erzeugen der Schnittpunkt-Vergrößerten-Ansicht an einer Position des Führungspunkts benötigt wird, wobei die vergrößerte Ansicht eine Führungsrichtung in einem Zustand zeigt, in dem sie der Karte in einer Umgebung des Führungspunkts überlagert ist.

10. Vorrichtung nach Anspruch 9, wobei, wenn die Kartenbestätigungseinrichtung beurteilt hat, dass die Karteninformation gespeichert worden ist, die zum Erzeugen der Schnittpunkt-Vergrößerten-Ansicht an der Position des Führungspunkts benötigt wird, die Routenführungseinrichtung eine Führungspunktkarte erzeugt, die durch Extrahieren einer Karte in einem vorgegebenen Bereich erhalten wird, der den Führungspunkt und Positionsinformation über den Führungspunkt einschließt, und, wenn die Kartenbestätigungseinrichtung beurteilt hat, dass keine der Karteninformationen gespeichert worden ist, die Routenführungseinrichtung eine Führungsinformationszeichnung zum Anzeigen einer Führungsrichtung erzeugt.

11. Vorrichtung nach Anspruch 9, wobei, wenn die Kartenbestätigungseinrichtung beurteilt hat, dass keine der Karteninformationen gespeichert worden ist, die zum Erzeugen der Schnittpunkt-Vergrößerten-Ansicht an der Position des Führungspunkts benötigt wird, die Routenführungseinrichtung an das Informationszentrum (107) eine Anforderung zum Erzeugen der Schnittpunkt-Vergrößerte-Ansicht an dem Führungspunkt überträgt.

12. Vorrichtung nach Anspruch 9, wobei, wenn die Kartenbestätigungseinrichtung beurteilt hat, dass keine der Karteninformationen gespeichert worden ist, die zum Erzeugen der Schnittpunkt-Vergrößerten-Ansicht an der Position des Führungspunkts benötigt wird, die Routenführungseinrichtung an das Informationszentrum (107) eine Anforderung zum Erzeugen von Karteninformation, die den Führungspunkt einschließt, überträgt.

13. Vorrichtung nach Anspruch 1, ferner mit:
einer Antriebszustand-Überwachungseinrichtung zum Überwachen eines Antriebszustands eines Eigenfahrzeugs (self-vehicle) (102), wobei
die Routenführungseinrichtung eine Einrichtung zum Beurteilen, ob die Eigendatenendgerätvorrichtung (132) von der Route abgewichen ist oder nicht, aus der empfangenen Routeninformation und der Positionsinformation, die von der Positionsmesseinrichtung gemessen wird, und eine Einrichtung zum Bestimmen einschließt, wenn beurteilt wird, dass die Eigendatenendgerätvorrichtung (132) abgewichen ist, ob das Informationszentrum (107) aufgefordert werden soll oder nicht, eine Routenberechnung an den Zielort in Übereinstimmung mit dem Antriebszustand durchzuführen, der von der Antriebszustands-Überwachungseinrichtung erfasst wird.

14. Vorrichtung nach Anspruch 13, wobei die Routenführungseinrichtung die Einrichtung zum Beurteilen, ob das Eigendatenendgerät (132) von der Route abgewichen ist oder nicht, aus der empfangenen Routeninformation und der Positionsinformation einschließt, die von der Positionsmesseinrichtung gemessen wird, und eine Einrichtung zum Beurteilen einschließt, wenn beurteilt wird, dass das Eigendatenendgerät (132) abgewichen ist, ob das Eigendatenendgerät (132) in einem In-Fahrt- (On-run) -Zustand ist oder nicht, und zum Verhindern, wenn das Eigendatenendgerät (132) in dem In-Fahrt-Zustand ist, dass die Routenberechnung an den Zielort bei dem Informationszentrum (107) angefordert wird.

15. Vorrichtung nach Anspruch 14, wobei die Routenführungseinrichtung ferner eine Einrichtung zum Beurteilen einschließt, dass das Eigenfahrzeug (102) von dem In-Fahrt-Zustand in einen Stoppzustand gewechselt hat, um einem Benutzer zu bestätigen, ob oder nicht das Informationszentrum (107) aufgefordert werden soll, die Routenberechnung an den Zielort durchzuführen.

16. Vorrichtung nach Anspruch 13, wobei die Routenführungseinrichtung einen Modus des automatischen Aufforderns des Informationszentrums (107) bereitstellt, die Routenberechnung an den Zielort durchzuführen, wenn das Eigendatenendgerät (132) von der Route abgewichen ist, und einen Modus bereitstellt, um einem Benutzer zu bestätigen, ob oder nicht das Informationszentrum (107) aufgefordert werden soll, die Routenberechnung an den Zielort durchzuführen, wenn das Eigendatenendgerät (132) von der Route abgewichen ist.

17. Vorrichtung nach Anspruch 13, ferner mit einer Sprachausgabeeinrichtung und einer Spracherkennungseinrichtung, wobei
die Routenführungseinrichtung zu einem Benutzer mit einer Stimme spricht, ob das Informationszentrum (107) aufgefordert werden soll oder nicht, die Routenberechnung an den Zielort durchzuführen, wenn das Eigendatenendgerät (132) von der Route abgewichen ist, und eine Benutzeranweisung durch die Spracherkennungseinrichtung erkennt und aus dem erkannten Ergebnis bestimmt, ob das Informationszentrum (107) aufgefordert werden soll oder nicht, die Routenberechnung an den Zielort durchzuführen.

18. Vorrichtung nach Anspruch 1, ferner mit einer Orbitalspur-Speichereinrichtung zum Speichern von Orbitalspurinformation über die Position der Eigendatenendgerätvorrichtung (132), die von der Positionsmesseinrichtung gemessen wird, wobei
die Kommunikationseinrichtung an das Informationszentrum (107) die aktuelle Ortsinformation, die von der Positionsmesseinrichtung erhalten wird, die Zielortinformation und die Orbitalspurinformation über die Eigendatenendgerätvorrichtung (132) bis direkt vor dem aktuellen Ort überträgt und die Routeninformation und die Führungspunktinformation bis an den Zielort empfängt, die von dem Informationszentrum (107) übertragen worden sind.

19. Informationszentrum (107) nach Anspruch 2,
wobei
die Routeninformations-Berechnungseinrichtung einen Vergleich zwischen Orbitalspurinformation über eine Position eines Anfragers und Straßenkarteninformation durchführt, um eine Straße, an welcher der Anfrager positioniert ist, und eine Vorrückrichtung desselben zu bestimmen, wobei die Orbitalspurinformation von der Kommunikationseinrichtung empfangen wird, und ferner die optimale Route aus der Positionsinformation über den Zielort berechnet, die von der Kommunikationseinrichtung erhalten wird, und dadurch die Routeninformation erzeugt.

20. Informationszentrum (107) nach Anspruch 19,
ferner mit einer Einrichtung zum Speichern der Orbitalspurinformation über die Position an jeder Anfragerbasis, wobei die Orbitalspurinformation von der Kommunikationseinrichtung empfangen wird,
wobei die Routeninformations-Berechnungseinrichtung Benutzungsfrequenzen von Straßen, die jeder Anfrager benutzt, aus der Orbitalspurinformation über die Position an jeder Anfragerbasis analysiert und einen Kostenparameter einer Straße senkt, deren Benutzungsfrequenz hoch ist, und dadurch als die Routeninformation die Straße mit hoher Benutzungsfrequenz mit hoher Priorität erzeugt.

21. Vorrichtung nach Anspruch 1, ferner mit:
einer Speichereinrichtung zum Speichern der empfangenen Daten, und
einer Kartenanzeigeeinrichtung (130) zum Anzeigen einer Karte,
wobei die Kommunikationseinrichtung an ein Informationszentrum (107) eine Kartenanforderung zum Spezifizieren von Positionsinformation und Maßstabsinformation überträgt, wobei die Speichereinrichtung die von dem Informationszentrum (107) übertragenen Kartendaten speichert und die Kartenanzeigeeinrichtung (130) die gespeicherten Kartendaten anzeigt.

22. Vorrichtung nach Anspruch 21, ferner mit:
einer Kartenanforderungseinrichtung zum Ausgeben einer Karteninformationsanforderung an das Informationszentrum (107), und
einer Antriebszustands-Beurteilungseinrichtung zum Unterscheiden eines Antriebszustands eines Fahrzeugs,
wobei die Kartenanforderungseinrichtung bestimmt, ob die Kartenanforderung in Übereinstimmung mit dem Antriebszustand des Fahrzeugs, der von der Antriebszustands-Beurteilungseinrichtung erfasst wird, kommuniziert werden soll oder nicht.

23. Vorrichtung nach Anspruch 22, wobei die Kartenanforderungseinrichtung beurteilt, ob der Antriebszustand des Fahrzeugs, der von der Antriebszustands-Beurteilungseinrichtung erfasst wird, ein In-Fahrt-Zustand ist oder nicht, wobei die Kartenanforderungseinrichtung die Kartenanforderung verhindert, wenn der Antriebszustand der In-Fahrt-Zustand ist.

24. Vorrichtung nach Anspruch 23, wobei die Kartenanforderungseinrichtung bestimmt, ob die Kartenanforderung ausgegeben werden soll oder nicht, wenn der Antriebszustand des Fahrzeugs in einen Stoppzustand gewechselt hat.

25. Vorrichtung nach Anspruch 23, wobei, wenn der Fahrzeugzustand der In-Fahrt-Zustand ist und wenn eine Karte, die zum Anzeigen einer Karte im gleichen Maßstab über eine Peripherie eines aktuellen Orts nicht in der Speichereinrichtung gespeichert worden ist, die Kartenanzeigeeinrichtung (130) eine weitreichende Karte anzeigt, die in der Speichereinrichtung gespeichert ist.

26. Vorrichtung nach Anspruch 21, wobei die Kommunikationseinrichtung einen Vergleich zwischen einer Aktualisierungsuhrzeit und einem Aktualisierungsdatum der Karteninformation, die in der Speichereinrichtung aufgezeichnet ist, und einer Aktualisierungsuhrzeit und einem Aktualisierungsdatum der Karteninformation, die derselben Karte entspricht, die in dem Informationszentrum (107) aufgezeichnet ist, und dadurch überwacht, ob die Karteninformation aktualisiert worden ist oder nicht.

27. Vorrichtung nach Anspruch 26, wobei der Vergleich zwischen der Aktualisierungsuhrzeit und dem Aktualisierungsdatum der Karte in dem Informationszentrum (107) und der Aktualisierungsuhrzeit und dem Aktualisierungsdatum der gespeicherten Karte erfolgt, und wenn beurteilt wird, dass die Karte in dem Informationszentrum (107) aktualisiert worden ist, die Kartenaktualisierung mit einem Bild oder einer Stimme mitgeteilt wird.

28. Vorrichtung nach Anspruch 27, wobei, wenn die Karte in dem Informationszentrum (107) aktualisiert worden ist, eine Differenzinformation der aktualisierten Karte empfangen wird und die Karteninformation aus der Karteninformation aktualisiert wird, die in der Speichereinrichtung und der Differenzinformation aufgezeichnet ist.

29. Vorrichtung nach Anspruch 21, wobei die Kartenanzeigeeinrichtung (130) die durch die Kommunikationseinrichtung erhaltene Karte speichert und, wenn eine Karteninformation über eine vorgegebene Position angefordert wird, die Einrichtung (130) beurteilt, ob die Karteninformation in der Speichereinrichtung gespeichert worden ist oder nicht, wobei die Einrichtung (130), wenn sie gespeichert worden ist, die Karteninformation aus der Speichereinrichtung ausliest, und wenn sie nicht gespeichert worden ist, die Karte beim Informationszentrum (107) anfordert.

30. Vorrichtung nach Anspruch 29, wobei die Speichereinrichtung beurteilt, ob ein Speicherbereich zum Speichern der empfangenen Karteninformation existiert oder nicht, und wenn beurteilt wird, dass dieser Speicherbereich fehlt, die Speichereinrichtung bereits existierende Karteninformation darin in einer Sequenz löscht, die bei ihrer ältesten Bezugsuhrzeit und ihrem ältesten Bezugsdatum beginnt, und die empfangene Karteninformation speichert.

31. Informationszentrum nach Anspruch 2, ferner mit:
einer Kartenspeichereinrichtung zum Speichern einer Karte, und
einer Kartenausschnitteinrichtung (124) zum Ausschneiden von Kartendaten aus Positionsinformation und Maßstabinformation, wobei
das Informationszentrum (107) eine Identifikationsnummer eines Benutzers, der eine Kartendatenausschnittanforderung stellt, den ausgeschnittenen Kartenbereich und aktualisierte Information über die Karteninformation verwaltet und speichert.

32. Informationszentrum (107) nach Anspruch 31, wobei, wenn die Karte in dem Informationszentrum (107) aktualisiert worden ist, indem die Identifikationsnummer des Benutzers aufgerufen wird, zu dem die Karte in dem aktualisierten Kartenbereich übertragen worden ist, der Benutzer über die Aktualisierung der Karte in dem Informationszentrum (107) informiert wird.

33. Informationszentrum (107) nach Anspruch 32, wobei, wenn die aktualisierte Karte zugestellt wird, eine Differenzinformation der Karte zugestellt wird.

34. Informationszentrum (107) nach Anspruch 2,
wobei
die Kommunikationseinrichtung dazu ausgelegt ist, zu beurteilen, dass Routenführungsinformation angefordert worden ist, und die Routenführungsinformation zu der Führungspunktinformation und der Routeninformation hinzuzufügen und ferner Routenführungsdaten zu erzeugen, zu welchen eine Verbindungsinformation zur Bezugnahme auf die Routeninformation aus der Führungspunktinformation hinzugefügt worden ist, wobei die Kommunikationseinrichtung dann die Routenführungsdaten an eine Anforderungsquelle überträgt.

35. Informationszentrum (107) nach Anspruch 34, wobei die Routeninformation durch Suchen der optimalen Route aus der Positionsinformation über den Startort und den Zielort und durch Umwandeln der optimalen Route in Daten erzeugt wird, in denen die Breitengrade/Längengrade der Punkte in notwendiger Zahl als Routensuchdaten angeordnet sind.

36. Informationszentrum (107) nach Anspruch 34, wobei die Routeninformation durch Suchen der optimalen Route aus der Positionsinformation über den Startort und den Zielort und durch Berechnen von Differenzen der Punkte aus Breitengraden/Längengraden von Punkten vor und hinter den Punkten und Umwandeln der Differenzdaten in Daten erzeugt wird, in denen die Differenzen in notwendiger Zahl als Routensuchdaten angeordnet sind.

37. Informationszentrum (107) nach Anspruch 35, wobei die Routeninformation eine Einrichtung zum Auswählen einer Route eines vorgegebenen Straßentyps aufweist, wobei die Routeninformation auch die Routendaten des ausgewählten Straßentyps in Daten umwandelt, bei denen die Routendaten in notwendiger Anzahl angeordnet sind.

38. Informationszentrum (107) nach Anspruch 34, wobei die Routeninformation durch Suchen der optimalen Route aus der Positionsinformation über den Startort und den Zielort durch Umwandeln von Verbindungsdaten in Daten erzeugt wird, bei denen die Verbindungsdaten in notwendiger Zahl als Routensuchdaten angeordnet sind, eine Kennung, die für jede Straße eindeutig ist, welche zwei Schnittpunkte verbindet, die an den Verbindungsdaten angebracht sind.

39. Informationszentrum (107) nach Anspruch 34, wobei die Führungspunktinformation Information von irgendwelchen oder einer Kombination von Führungspunktkartendaten einschließt, die durch Extrahieren einer Karte in einem vorgegebenen Umfang erhalten werden, der den Führungspunkt, Führungspfeildaten zum Angeben einer Richtung einer Straße zum Eintreten an dem Führungspunkt und Führungssprachdaten einschließt, um mit einer Stimme die Straße zum Eintritt an dem Führungspunkt zu führen.

40. Informationszentrum (107) nach Anspruch 39, wobei bei der Erzeugung der Führungspunktkartendaten die Führungspunktinformations-Berechnungseinrichtung einen Typ der Straße zum Eintreten an dem Führungspunkt differenziert und in Übereinstimmung mit dem beurteilten Straßentyp einen Bereich bestimmt, in dem die Führungspunktkartendaten erzeugt werden sollten.

41. Informationszentrum (107) nach Anspruch 39, wobei die Führungspunktinformations-Berechnungseinrichtung die Führungspfeildaten erzeugt, wobei die Führungspfeildaten Positionsinformation über den Führungspunkt, den Straßentyp der Straße, die an dem Führungspunkt eintreten soll, und denjenigen einer Straße, die dort austreten soll, und einen Winkel, der zwischen der Straße zum Eintreten und der Straße zum Austreten gebildet ist, einschließen.

42. Informationszentrum (107) nach Anspruch 39, wobei die Führungspunktinformations-Berechnungseinrichtung die Führungssprachdaten erzeugt, die Positionsinformation über den Führungspunkt und Sprachführungsdaten einschließen.

43. Informationszentrum (107) nach Anspruch 2, wobei beurteilt wird, dass Routenführungsinformation angefordert worden ist, wobei die optimale Route aus der Positionsinformation über den Startort und den Zielort gesucht wird, wobei die Routeninformation in schematische Konfigurationsdaten umgewandelt wird, die zu einer Anforderungsquelle übertragen werden, und die Routenführungsinformation die Führungspunktinformation und die Routeninformation einschließt, welche übertragen werden, wenn weitere detaillierte Routeninformation angefordert wird.

44. Informationszentrum (107) nach Anspruch 2, ferner mit: einer Routenablauf-Speichereinrichtung zum Speichern von Routeninformation und Führungsinformation, die in der Vergangenheit über jede Benutzerbasis angefordert wurde, und der Routeninformation, die aus dem Startort berechnet wurde, an dem jeder Benutzer gestartet ist, und der Zielort-Extraktrouteninformation, die sich von der Routeninformation unterscheidet, die in der Routenablauf-Speichereinrichtung gespeichert ist, wobei die extrahierte Routeninformation und Führungspunktinformation, die dieser entspricht, dann übertragen werden.

45. Informationszentrum (107) nach Anspruch 44, wobei beurteilt wird, ob eine Nachsuche der Route angefordert worden ist oder nicht, und wenn beurteilt wird, dass diese Nachsuche angefordert worden ist, eine Route extrahiert wird, wo sich das erste Suchergebnis und das Nachsucheergebnis voneinander unterscheiden, wobei die extrahierte Routeninformation und Führungspunktinformation, die dieser entspricht, dann übertragen werden.

46. Informationszentrum (107) nach Anspruch 44, wobei beurteilt wird, ob eine Routensuche einer Rückkehrroute angefordert worden ist oder nicht, und wenn beurteilt wird, dass die Routensuche der Rückkehrroute angefordert worden ist, eine Route extrahiert wird, wo sich die Routensuchergebnisse zwischen der Annäherungsroute und der Rückkehrroute unterscheiden, wobei die Routeninformation über die extrahierte Rückkehrroute und Führungspunktinformation, die dieser entspricht, dann übertragen werden.

47. Informationszentrum (107) nach Anspruch 2, ferner mit:
einer Einrichtung zum Speichern einer Kartendatenbank, und
einer Kartenextraktionseinrichtung zum Extrahieren von Kartendaten aus Positionsinformation und Maßstabsinformation in einem vorgegebenen Bereich, der die Position einschließt, wobei die Kartenextraktionseinrichtung ferner eine Einrichtung zum Extrahieren und Editieren von Karteninformation mit einem vorgegebenen Attribut in Übereinstimmung mit einem Verwendungszweck der Karte einschließt.

48. Informationszentrum (107) nach Anspruch 47, wobei die Kartenextraktionseinrichtung als die Einrichtung zum Extrahieren und Editieren der Karteninformation mit dem vorgegebenen Attribut eine Einrichtung zum Erzeugen einer Straßenkonfiguration und eine Einrichtung zum Erzeugen einer Verbindungsbeziehung zwischen der Straßenkonfiguration und der Straße einschließt.

49. Vorrichtung nach Anspruch 1, wobei, wenn eine Routenführungsinformation an den Zielort angefordert worden ist, eine vorhergesagte Datengröße, die für die Kommunikationen benötigt wird, aus einer Positionsbeziehung zwischen der aktuellen Ortsinformation, die durch die Positionsmesseinrichtung und die Zielortinformation erhalten wird, berechnet wird, wobei ein Ergebnis der Berechnung aus der Datengröße einer Kommunikationsgebühr, die für die Kommunikationen benötigt wird, dann mit einer Stimme oder einem Bild ausgegeben wird.

50. Kommunikationstyp-Navigationsvorrichtung nach Anspruch 1, wobei
die Kommunikationseinrichtung an das Informationszentrum (107) die aktuelle Ortsinformation, die von der Positionsmesseinrichtung erhalten wird, und die Zielortinformation überträgt und eine Datengröße der Routeninformation und der Führungspunktinformation bis an den Zielort empfängt, die vom Informationszentrum (107) übertragen worden sind, wobei die Kommunikationseinrichtung aus der empfangenen Datengröße auch eine Kommunikationsgebühr, die für die Kommunikationen benötigt wird, berechnet und die Kommunikationsgebühr mit einer Stimme oder einem Bild ausgibt.

51. Vorrichtung nach Anspruch 1, wobei
die Kommunikationseinrichtung an das Informationszentrum (107) die aktuelle Ortsinformation, die von der Positionsmesseinrichtung erhalten wird, und die Zielortinformation überträgt und ihre übertragene Datenmenge misst und die Routeninformation und die Führungspunktinformation bis an den Zielort empfängt, die von dem Informationszentrum (107) übertragen worden sind, und ihre empfangene Datenmenge misst und mit einer Stimme oder einem Bild eine Kommunikationsgebühr, die für die Kommunikationen benötigt wird, aus der übertragenen Datenmenge und der gemessenen empfangenen Datenmenge ausgibt.

52. Vorrichtung nach Anspruch 21, wobei
die Kommunikationseinrichtung an das Informationszentrum (107) die Kartenanforderung für eine Karte in einem vorgegebenen Bereich, der einen vorgegebenen Punkt einschließt, überträgt und eine Datengröße der vom Informationszentrum (107) übertragenen Karte empfängt, wobei die Kommunikationseinrichtung auch aus der empfangenen Datengröße eine Kommunikationsgebühr berechnet, die für die Kommunikationen benötigt wird, und die Kommunikationsgebühr mit einer Stimme oder einem Bild ausgibt.

53. Vorrichtung nach Anspruch 21, wobei
die Kommunikationseinrichtung an das Informationszentrum (107) die Kartenanforderung für eine Karte in einem vorgegebenen Bereich, der einen vorgegebenen Punkt einschließt, überträgt und die vom Informationszentrum (107) übertragene Karteninformation empfängt und ihre empfangene Datenmenge misst und mit einer Stimme oder einem Bild eine Kommunikationsgebühr, die für die Kommunikationen benötigt wird, aus der übertragenen Datenmenge und der gemessenen empfangenen Datenmenge ausgibt.

## Revendications

1. Dispositif de navigation de type à communications, comprenant :
un moyen de mesure de position pour mesurer une position d'un dispositif terminal personnel (132) ;
un moyen d'établissement de lieu de destination pour établir une information de lieu de destination,
un moyen de communications pour effectuer une transmission/réception de données avec un centre d'information (107), et
un moyen de guidage de parcours pour effectuer un guidage de parcours jusqu'audit lieu de destination, dans lequel
ledit moyen de communications est adapté à transmettre, audit centre d'information (107), une information de lieu actuel obtenue par ledit moyen de mesure de position et ladite information de lieu de destination, et à recevoir, dudit centre d'information (107), une information de parcours et une information de point de guidage jusqu'audit lieu de destination qui a été transmis audit centre d'information (107), et
ledit moyen de guidage de parcours utilise lesdites information de parcours et information de point de guidage reçues de façon à exécuter un guidage jusqu'audit lieu de destination,
**caractérisé en ce que**
ledit dispositif comprend en outre un moyen de spécification de type de mode de guidage pour spécifier un type de mode de guidage employé pour ledit guidage dans ledit guidage de parcours,
ledit moyen de communications est adapté à transmettre en outre audit centre d'information (107), outre ladite information de lieu actuel et ladite information de lieu de destination, ledit type de mode de guidage, et à recevoir une information de point de guidage associée audit type de mode de guidage spécifié, et
ledit moyen de guidage de parcours est adapté à exécuter ledit guidage jusqu'audit lieu de destination en utilisant ladite information de parcours et ladite information de point de guidage reçues associées audit type de mode de guidage spécifié.

2. Centre d'information (107), comprenant :
un moyen de communications pour effectuer une transmission/réception de données,
un moyen de calcul d'information de parcours pour créer une information de parcours en calculant un parcours optimum à partir d'une information de position sur un lieu de départ et d'un lieu de destination, et
un moyen de calcul d'information de point de guidage pour créer une information de point de guidage en faisant référence audit parcours calculé de façon à extraire un point de guidage auquel un parcours en cours doit être modifié,
**caractérisé en ce que**
ledit moyen de calcul d'information de point de guidage est adapté à juger un type de mode de guidage en correspondance avec une configuration de route au niveau dudit point de guidage, et crée ainsi ladite information de point de guidage associée audit type de mode de guidage jugé.

3. Centre d'information (107) selon la revendication 2, dans lequel ledit moyen de calcul d'information de point de guidage juge ledit type de mode de guidage en correspondance avec un degré de complexité de ladite route audit point de guidage, et crée ainsi ladite information de point de guidage incluant ledit type de mode de guidage jugé.

4. Centre d'information (107) selon la revendication 2, dans lequel ledit moyen de calcul d'information de point de guidage juge ledit type de mode de guidage en correspondance avec un type d'une route connectée audit point de guidage, et crée ainsi ladite information de point de guidage incluant ledit type de mode de guidage jugé.

5. Centre d'information (107) selon la revendication 2, comprenant en outre un moyen (111) de gestion d'utilisateur pour gérer un utilisateur qui établit une connexion avec celui-ci, un moyen de stockage de type de mode de guidage pour stocker ledit type de mode de guidage sur la base de chaque utilisateur, et un moyen d'établissement de type de mode de guidage pour établir ledit type de mode de guidage, dans lequel
ledit moyen de calcul d'information de point de guidage fait référence audit type de mode de guidage stocké dans ledit moyen de stockage de type de mode de guidage, et crée ainsi ladite information de point de guidage incluant ledit type de mode de guidage auquel ladite référence a été faite.

6. Centre d'information (107) selon la revendication 2, dans lequel, lorsqu'une vue agrandie de point d'intersection est sélectionnée comme ledit type de mode de guidage, ledit moyen de calcul d'information de point de guidage crée, comme ladite information de point de guidage, une carte de point de guidage obtenue en extrayant une carte dans une plage prédéterminée incluant ledit point de guidage, ladite vue agrandie affichant une direction de guidage dans un état d'être superposée sur ladite carte à proximité dudit point de guidage.

7. Dispositif selon la revendication 1, dans lequel, lorsqu'une vue agrandie de point d'intersection est sélectionnée comme ledit type de mode de guidage, ledit moyen de guidage de parcours crée une carte de point de guidage obtenue en extrayant une carte dans une plage prédéterminée incluant ledit point de guidage et une information de position sur ledit point de guidage, ladite vue agrandie affichant une direction de guidage dans un état d'être superposée sur ladite carte à proximité dudit point de guidage.

8. Dispositif selon la revendication 7, dans lequel un jugement est effectué quant à savoir si ladite carte dans ladite plage prédéterminée incluant ledit point de guidage et ladite information de position sur ledit point de guidage a été ou non mise à jour, et, s'il est jugé que ladite carte a été mise à jour, une demande de création de ladite vue agrandie de point d'intersection audit point de guidage est transmise audit centre d'information (107).

9. Dispositif selon la revendication 1, dans lequel ledit moyen de guidage de parcours inclut un moyen de confirmation de carte, ledit moyen de confirmation de carte jugeant si, lorsqu'une vue agrandie de point d'intersection est sélectionnée comme ledit type de mode de guidage, il a été ou non stocké une information de carte nécessaire pour créer ladite vue agrandie de point d'intersection à une position dudit point de guidage, ladite vue agrandie affichant une direction de guidage dans un état d'être superposée sur ladite carte à proximité dudit point de guidage.

10. Dispositif selon la revendication 9, dans lequel, si ledit moyen de confirmation de carte a jugé qu'il a été stocké ladite information de carte nécessaire pour créer ladite vue agrandie de point d'intersection à ladite position dudit point de guidage, ledit moyen de guidage de parcours créera une carte de point de guidage obtenue en extrayant une carte dans une plage prédéterminée incluant ledit point de guidage et une information de position sur ledit point de guidage, et, si ledit moyen de confirmation de carte a jugé qu'il n'a été stocké aucune dite information de carte, ledit moyen de guidage de parcours crée un dessin d'information de guidage pour afficher une direction de guidage.

11. Dispositif selon la revendication 9, dans lequel, si ledit moyen de confirmation de carte a jugé qu'il n'a été stocké aucune dite information de carte nécessaire pour créer ladite vue agrandie de point d'intersection à ladite position dudit point de guidage, ledit moyen de guidage de parcours transmet, audit centre d'information (107), une demande de création de ladite vue agrandie de point d'intersection audit point de guidage.

12. Dispositif selon la revendication 9, dans lequel, si ledit moyen de confirmation de carte a jugé qu'il n'a été stockée aucune dite information de carte nécessaire pour créer ladite vue agrandie de point d'intersection à ladite position dudit point de guidage, ledit moyen de guidage de parcours transmet, audit centre d'information (107), une demande de création d'une information de carte incluant ledit point de guidage.

13. Dispositif selon la revendication 1, comprenant en outre :
un moyen de surveillance de situation de conduite pour surveiller une situation de conduite d'un véhicule personnel (102), dans lequel
ledit moyen de guidage de parcours inclut un moyen pour juger si ledit dispositif terminal personnel (132) s'est ou non écarté dudit parcours par rapport à ladite information de parcours reçue et ladite information de position mesurée par ledit moyen de mesure de position, et un moyen pour déterminer, si ledit dispositif terminal personnel (132) est jugé s'être écarté, s'il convient ou non de demander audit centre d'information (107) d'effectuer un calcul de parcours jusqu'audit lieu de destination en correspondance avec ladite situation de conduite détectée par ledit moyen de surveillance de situation de conduite.

14. Dispositif selon la revendication 13, dans lequel ledit moyen de guidage de parcours inclut ledit moyen pour juger si ledit terminal personnel (132) s'est ou non écarté dudit parcours par rapport à ladite information de parcours reçue et ladite information de position mesurée par ledit moyen de mesure de position, et un moyen pour juger, si ledit dispositif terminal personnel (132) est jugé s'être écarté, si ledit terminal personnel (132) est ou non dans une situation de roulage, et pour interdire, si ledit terminal personnel (132) est dans ladite situation de roulage, que ledit calcul de parcours jusqu'audit lieu de destination soit demandé audit centre d'information (107).

15. Dispositif selon la revendication 14, dans lequel ledit moyen de guidage de parcours inclut en outre un moyen pour juger que ledit véhicule personnel (102) est passé de ladite situation de roulage à une situation d'arrêt de façon à confirmer à un utilisateur s'il convient ou non de demander audit centre d'information (107) d'effectuer ledit calcul de parcours jusqu'audit lieu de destination.

16. Dispositif selon la revendication 13, dans lequel ledit moyen de guidage de parcours offre un mode de demande automatique audit centre d'information (107) d'effectuer ledit calcul de parcours jusqu'audit lieu de destination lorsque ledit terminal personnel (132) s'est écarté dudit parcours, et un mode de confirmation à un utilisateur s'il convient ou non de demander audit centre d'information (107) d'effectuer ledit calcul de parcours jusqu'audit lieu de destination lorsque ledit terminal personnel (132) s'est écarté dudit parcours.

17. Dispositif selon la revendication 13, comprenant en outre un moyen de sortie vocale et un moyen de reconnaissance vocale, dans lequel
ledit moyen de guidage de parcours parle à un utilisateur, avec une voix, quant à savoir s'il convient ou non de demander audit centre d'information (107) d'effectuer ledit calcul de parcours jusqu'audit lieu de destination lorsque ledit terminal personnel (132) s'est écarté dudit parcours, et reconnaît une instruction d'utilisateur par ledit moyen de reconnaissance vocale, et détermine, à partir dudit résultat reconnu, s'il convient ou non de demander audit centre d'information (107) d'effectuer ledit calcul de parcours jusqu'audit lieu de destination.

18. Dispositif selon la revendication 1, comprenant en outre un moyen de stockage de trajectoire orbitale pour stocker une information de trajectoire orbitale sur ladite position dudit dispositif terminal personnel (132) mesurée par ledit moyen de mesure de position, dans lequel
ledit moyen de communications transmet, audit centre d'information (107), ladite information de lieu actuel obtenue par ledit moyen de mesure de position, ladite information de lieu de destination, et ladite information de trajectoire orbitale sur ledit dispositif terminal personnel (132) jusqu'à directement avant ledit lieu actuel, et reçoit ladite information de parcours et ladite information de point de guidage jusqu'audit lieu de destination qui ont été transmises dudit centre d'information (107).

19. Centre d'information (107) selon la revendication 2, dans lequel
ledit moyen de calcul d'information de parcours fait une comparaison entre une information de trajectoire orbitale sur une position d'un demandeur et une information de carte routière de façon à déterminer une route sur laquelle ledit demandeur est positionné et une direction de déplacement de celui-ci, ladite information de trajectoire orbitale étant reçue par ledit moyen de communications, et, de plus, calcule ledit parcours optimum à partir de ladite information de position et dudit lieu de destination obtenus par ledit moyen de communications, et crée ainsi ladite information de parcours.

20. Centre d'information (107) selon la revendication 19, comprenant en outre un moyen pour stocker ladite information de trajectoire orbitale sur ladite position sur la base de chaque demandeur, ladite information de trajectoire orbitale étant reçue par ledit moyen de communications,
ledit moyen de calcul d'information de parcours analysant des fréquences d'utilisation de routes que chaque demandeur utilise à partir de ladite information de trajectoire orbitale sur ladite position sur la base de chaque demandeur, et faisant baisser un paramètre de coût d'une route dont la fréquence d'utilisation est élevée, et créant ainsi, comme ladite information de parcours, ladite route à fréquence d'utilisation élevée avec une priorité élevée.

21. Dispositif selon la revendication 1, comprenant en outre :
un moyen de stockage pour stocker lesdites données reçues, et
un moyen (130) d'affichage de carte pour afficher une carte,
dans lequel ledit moyen de communications transmet, à un centre d'information (107), une demande de carte pour spécifier une information de position et une information d'échelle, ledit moyen de stockage stockant lesdites données de carte transmises dudit centre d'information (107), ledit moyen (130) d'affichage de carte affichant lesdites données de carte stockées.

22. Dispositif selon la revendication 21, comprenant en outre :
un moyen de demande de carte pour envoyer une demande d'information de carte audit centre d'information (107), et
un moyen de jugement de situation de conduite pour différencier une situation de conduite d'un véhicule,
ledit moyen de demande de carte déterminant s'il convient ou non de communiquer ladite demande de carte en correspondance avec ladite situation de conduite dudit véhicule acquise par ledit moyen de jugement de situation de conduite.

23. Dispositif selon la revendication 22, dans lequel ledit moyen de demande de carte juge si ladite situation de conduite dudit véhicule acquise par ledit moyen de jugement de situation de conduite est ou non une situation de roulage, ledit moyen de demande de carte interdisant ladite demande de carte si ladite situation de conduite est ladite situation de roulage.

24. Dispositif selon la revendication 23, dans lequel ledit moyen de demande de carte détermine s'il convient ou non d'envoyer ladite demande de carte si ladite situation de conduite dudit véhicule est passée à une situation d'arrêt.

25. Dispositif selon la revendication 23, dans lequel, si ladite situation de véhicule est ladite situation de roulage et si une carte nécessaire pour afficher une carte à une même échelle sur une périphérie du lieu actuel n'a pas été stockée dans ledit moyen de stockage, ledit moyen (130) d'affichage de carte affiche une carte générale stockée dans ledit moyen de stockage.

26. Dispositif selon la revendication 21, dans lequel ledit moyen de communications fait une comparaison entre une heure et une date de mise à jour de ladite information de carte enregistrée dans ledit moyen de stockage et une heure et une date de mise à jour d'information de carte correspondant à la même carte enregistrée dans ledit centre d'information (107), et surveille ainsi si ladite information de carte a été ou non mise à jour.

27. Dispositif selon la revendication 26, dans lequel ladite comparaison est faite entre lesdites heure et date de mise à jour de ladite carte dans ledit centre d'information (107) et lesdites heure et date de mise à jour de ladite carte stockée, et, si ladite carte dans ledit centre d'information (107) est jugée avoir été mise à jour, ladite mise à jour de carte est notifiée avec une image ou une voix.

28. Dispositif selon la revendication 27, dans lequel, si ladite carte dans ledit centre d'information (107) a été mise à jour, une information différentielle de ladite carte mise à jour est reçue, et ladite information de carte est mise à jour à partir de ladite information de carte enregistrée dans ledit moyen de stockage et de ladite information différentielle.

29. Dispositif selon la revendication 21, dans lequel ledit moyen (130) d'affichage de carte stocke ladite carte acquise par ledit moyen de communications et, si une information de carte à une position prédéterminée est demandée, ledit moyen (130) juge si ladite information de carte a ou non été stockée dans ledit moyen de stockage, ledit moyen (130), si elle est stockée, lisant ladite information de carte dans ledit moyen de stockage et, si elle n'est pas stockée, demandant ladite carte audit centre d'information (107).

30. Dispositif selon la revendication 29, dans lequel ledit moyen de stockage juge s'il existe ou non une zone de stockage pour stocker ladite information de carte reçue, et, si ladite zone de stockage est jugée manquer, ledit moyen de stockage efface une information de carte déjà existante dans celui-ci dans une séquence commençant à ses heure et date de référence les plus anciennes, et stocke ladite information de carte reçue.

31. Centre d'information (107) selon la revendication 2, comprenant en outre :
un moyen de stockage de carte pour stocker une carte, et
un moyen (124) de découpe de carte pour découper des données de carte à partir d'une information de position et d'une information d'échelle, dans lequel
ledit centre d'information (107) gère et stocke un numéro d'identification d'un utilisateur qui fait une demande de découpe de données de carte, ladite zone de carte découpée, et une information mise à jour sur ladite information de carte.

32. Centre d'information (107) selon la revendication 31, dans lequel, lorsque ladite carte dans ledit centre d'information (107) a été mise à jour, en récupérant ledit numéro d'identification dudit utilisateur auquel ladite carte dans ladite zone de carte mise à jour a été transmise, ledit utilisateur est informé de ladite mise à jour de ladite carte dans ledit centre d'information (107).

33. Centre d'information (107) selon la revendication 32, dans lequel, lors de la fourniture de ladite carte mise à jour, une information différentielle de ladite carte est fournie.

34. Centre d'information (107) selon la revendication 2, dans lequel
ledit moyen de communications est adapté à juger qu'une information de guidage de parcours a été demandée, et à ajouter ladite information de guidage de parcours à ladite information de point de guidage et à ladite information de parcours, et en outre à créer des données de guidage de parcours auxquelles une information de liaison pour faire référence à ladite information de parcours à partir de ladite information de point de guidage a été ajoutée, ledit moyen de communications transmettant ensuite lesdites données de guidage de parcours à une source de demande.

35. Centre d'information (107) selon la revendication 34, dans lequel ladite information de parcours est créée en recherchant ledit parcours optimum à partir de ladite information de position sur ledit lieu de départ et ledit lieu de destination, et en convertissant le parcours optimum en données où lesdites latitudes/longitudes desdits points sont agencées en un nombre nécessaire comme données de recherche de parcours.

36. Centre d'information (107) selon la revendication 34, dans lequel ladite information de parcours est créée en recherchant ledit parcours optimum à partir de ladite information de position sur ledit lieu de départ et ledit lieu de destination, et en calculant des différences desdits points par rapport à des latitudes/longitudes de points en avant et en arrière desdits points, et en convertissant lesdites données différentielles en données où lesdites différences sont agencées en un nombre nécessaire comme données de recherche de parcours.

37. Centre d'information (107) selon la revendication 35, dans lequel ladite information de parcours a un moyen pour sélectionner un parcours d'un type de route prédéterminé, ladite information de parcours convertissant également lesdites données de parcours dudit type de route sélectionné en données où lesdites données de parcours sont agencées en un nombre nécessaire.

38. Centre d'information (107) selon la revendication 34, dans lequel ladite information de parcours est créée en recherchant ledit parcours optimum à partir de ladite information de position sur ledit lieu de départ et ledit lieu de destination, en convertissant des données de liaison en données où lesdites données de liaison sont agencées en un nombre nécessaire comme données de recherche de parcours, un ID qui est unique pour chaque route connectant deux points d'intersection étant joint auxdites données de liaison.

39. Centre d'information (107) selon la revendication 34, dans lequel ladite information de point de guidage inclut une information d'une quelconque ou d'une combinaison de données de carte de point de guidage obtenues en extrayant une carte dans une plage prédéterminée incluant ledit point de guidage, des données de flèche de guidage pour indiquer une direction d'une route à prendre audit point de guidage, et des données vocales de guidage pour guider, avec une voix, sur ladite route à prendre audit point de guidage.

40. Centre d'information (107) selon la revendication 39, dans lequel, dans ladite création desdites données de carte de point de guidage, ledit moyen de calcul d'information de point de guidage différencie un type de ladite route à prendre audit point de guidage et, en correspondance avec ledit type de route jugé, détermine une zone où lesdites données de carte de point de guidage doivent être créées.

41. Centre d'information (107) selon la revendication 39, dans lequel ledit moyen de calcul d'information de point de guidage crée lesdites données de flèche de guidage, lesdites données de flèche de guidage incluant une information de position sur ledit point de guidage, ledit type de route de ladite route à prendre audit point de guidage et celui d'une route à quitter au niveau de celui-ci, et un angle formé entre ladite route à prendre et ladite route à quitter.

42. Centre d'information (107) selon la revendication 39, dans lequel ledit moyen de calcul d'information de point de guidage crée lesdites données vocales de guidage incluant une information de position sur ledit point de guidage et des données de guidage vocal.

43. Centre d'information (107) selon la revendication 2, dans lequel il est jugé qu'une information de guidage de parcours a été demandée, ledit parcours optimum étant recherché à partir de ladite information de position sur ledit lieu de départ et ledit lieu de destination, ladite information de parcours convertie en données de configuration schématique étant transmises à une source de demande, ladite information de guidage de parcours incluant ladite information de point de guidage et ladite information de parcours étant transmise si une information de parcours plus détaillée est demandée.

44. Centre d'information (107) selon la revendication 2, comprenant en outre : un moyen de stockage d'historique de parcours pour stocker une information de parcours et une information de guidage demandées dans le passé sur la base de chaque utilisateur, et ladite information de parcours calculée à partir dudit lieu de départ d'où chaque utilisateur est parti et dudit lieu de destination extrait une information de parcours qui diffère de ladite information de parcours stockée dans ledit moyen de stockage d'historique de parcours, lesdites information de parcours et information de point de guidage extraites correspondant à celui-ci étant ensuite transmises.

45. Centre d'information (107) selon la revendication 44, dans lequel il est jugé si une nouvelle recherche dudit parcours a ou non été demandée, et si ladite nouvelle recherche est jugée avoir été demandée, un parcours est extrait où le résultat de ladite première recherche et un résultat de ladite nouvelle recherche diffèrent l'un de l'autre, lesdites information de parcours et information de point de guidage extraites correspondant à celui-ci étant ensuite transmises.

46. Centre d'information (107) selon la revendication 44, dans lequel il est jugé si une recherche de parcours d'un parcours de retour a ou non été demandée, et si ladite recherche de parcours dudit parcours de retour est jugée avoir été demandée, un parcours est extrait où lesdits résultats de recherche de parcours diffèrent entre ledit parcours d'approche et ledit parcours de retour, lesdites information de parcours sur ledit parcours de retour extrait et information de point de guidage correspondant à celui-ci étant ensuite transmises.

47. Centre d'information (107) selon la revendication 2, comprenant en outre :
un moyen pour stocker une base de données cartographiques, et
un moyen d'extraction de carte pour extraire, à partir d'une information de position et d'une information d'échelle, des données cartographiques dans une zone prédéterminée incluant ladite position, dans lequel ledit moyen d'extraction de carte inclut en outre un moyen pour extraire et éditer une information de carte avec un attribut prédéterminé en correspondance avec un but d'utilisation de ladite carte.

48. Centre d'information (107) selon la revendication 47, dans lequel ledit moyen d'extraction de carte inclut, comme ledit moyen pour extraire et éditer ladite information de carte avec ledit attribut prédéterminé, un moyen pour créer une configuration de route et un moyen pour créer une relation de connexion entre ladite configuration de route et ladite route.

49. Dispositif selon la revendication 1, dans lequel, si une information de guidage de parcours jusqu'audit lieu de destination a été demandée, une taille prédite de données nécessaires pour lesdites communications est calculée à partir d'une relation de position entre ladite information de lieu actuel obtenue par ledit moyen de mesure de position et ladite information de lieu de destination, un résultat de calcul, à partir de ladite taille de données, d'un coût de communications nécessaire pour lesdites communications étant ensuite délivré en sortie avec une voix ou une image.

50. Dispositif de navigation de type à communications selon la revendication 1, dans lequel
ledit moyen de communications transmet, audit centre d'information (107), ladite information de lieu actuel obtenue par ledit moyen de mesure de position et ladite information de lieu de destination, et reçoit une taille de données de ladite information de parcours et de ladite information de point de guidage jusqu'audit lieu de destination qui ont été transmises dudit centre d'information (107), ledit moyen de communications calculant également, à partir de ladite taille de données reçue, un coût de communications nécessaire pour lesdites communications, et délivrant en sortie ledit coût de communications avec une voix ou une image.

51. Dispositif selon la revendication 1, dans lequel
ledit moyen de communications transmet, audit centre d'information (107), ladite information de lieu actuel obtenue par ledit moyen de mesure de position et ladite information de lieu de destination et mesure sa quantité de données transmises, et reçoit ladite information de parcours et ladite information de point de guidage jusqu'audit lieu de destination qui ont été transmises dudit centre d'information (107) et mesure sa quantité de données reçues, et délivre en sortie, avec une voix ou une image, un coût de communications nécessaire pour lesdites communications à partir de ladite quantité de données transmises et de ladite quantité de données reçues mesurées.

52. Dispositif selon la revendication 21, dans lequel
ledit moyen de communications transmet, audit centre d'information (107), ladite demande de carte pour une carte dans une zone prédéterminée incluant un point prédéterminé, et reçoit une taille de données de ladite carte transmise dudit centre d'information (107), ledit moyen de communications calculant également, à partir de ladite taille de données reçue, un coût de communications nécessaire pour lesdites communications, et délivrant en sortie ledit coût de communications avec une voix ou une image.

53. Dispositif selon la revendication 21, dans lequel
ledit moyen de communications transmet, audit centre d'information (107), ladite demande de carte pour une carte dans une zone prédéterminée incluant un point prédéterminé et mesure sa quantité de données transmises, et reçoit ladite information de carte transmise dudit centre d'information (107) et mesure sa quantité de données reçues, et délivre en sortie, avec une voix ou une image, un coût de communications nécessaire pour lesdites communications à partir de ladite quantité de données transmises et de ladite quantité de données reçues mesurées.
